# EUROPEAN PATENT SPECIFICATION

(11) **EP 4 549 135 B1**
(45) Date of publication and mention of the grant of the patent: **12.08.2026**
(21) Application number: 23207283.5
(22) Date of filing: 01.11.2023
(51) Int. Cl.: B29C 70/48, B29C 70/86, B29D 99/00

(54) **A WIND TURBINE BLADE WITH A REINFORCING STRUCTURE AND METHOD FOR ITS MANUFACTURE**
WINDTURBINENSCHAUFEL MIT VERSTÄRKUNGSSTRUKTUR UND VERFAHREN ZU SEINER HERSTELLUNG
PALE D'ÉOLIENNE AVEC STRUCTURE DE RENFORT ET PROCÉDÉ POUR SA FABRICATION

(43) Date of publication of application: 07.05.2025
(73) Proprietor: LM Wind Power A/S, 6000 Kolding (DK)
(72) Inventor: ALKEMADE, Harry, 1703 DH Heerhugowaard (NL); RAZEGHI, Rama, Eastleigh, SO53 4SE (GB); JØRGENSEN, Jeppe Bjørn, 6000 Kolding (DK); REDMOND-GRAY, Dylan, Eastleigh, SO53 4SE (GB); MANIKARNIKA, Kiran, 6000 Kolding (DK)
(74) Representative: COPA Copenhagen Patents

(56) References cited:
- EP-A1- 4 212 324
- WO-A1-2016/015736
- WO-A1-2022/188934

## Description

### FIELD OF INVENTION

The present disclosure relates to a reinforcing structure for a wind turbine blade, a wind turbine blade and methods of manufacturing thereof, as well as a modular system for manufacturing thereof.

### BACKGROUND

Wind power provides a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 m in length.

Wind turbine blades are usually manufactured by forming two shell parts or shell halves from layers of woven fabric or fibre and resin. Spar caps or main laminates are placed or integrated in the shell halves and may be combined with shear webs or spar beams to form structural support members. Spar caps or main laminates may be joined to, or integrated within, the inside of the suction and pressure halves of the shell.

As the size of wind turbine blades increases, various challenges arise from such blades being subjected to increased forces during operation, requiring improved reinforcing structures. In some known solutions, pultruded fibrous strips of material are used. Pultrusion is a continuous process in which fibres are pulled through a supply of liquid resin and then heated in an open chamber where the resin is cured. Such pultruded strips can be cut to any desired length.

However, the manufacturing of large reinforcing structures, such as spar caps or spar beams, in this way can be challenging, in particular when pultruded, carbon fibre-reinforced spar caps are used as the reinforcing members. Carbon fibres are typically lighter than glass fibres by volume and have improved tensile and compressive strength. In some known approaches, separate pultruded elements are used to form the reinforcing structure, and each element is individually positioned within the structure of the shell. This can easily lead to laminate defects, such as voids, wrinkles or misaligned fibres, that may have disadvantageous effects on mechanical properties. In other approaches, pultruded elements are laid up outside the shell and subsequently moved to the shell. This process often results in slight overlap and/or misplacement of the pultrusion layers which may also have disadvantageous effects on mechanical properties. WO 2016/015736 A1 discloses a method of manufacturing a wind turbine blade comprising a reinforcing structure, the wind turbine having a profiled contour including a pressure side and a suction side, and a leading edge and a trailing edge with a chord having a chord length extending therebetween, the wind turbine blade extending in a spanwise direction between a root end and a tip end, the method comprising the steps of:providing a blade shell mould,arranging a plurality of blade shell components in the blade shell mould,assembling of the reinforcing structure in the blade shell mould, the reinforcing structure comprising a plurality of strips of fibre material arranged into adjacent stacks of strips, and wherein the step of assembling of the reinforcing structure in the blade shell mould comprises pre-assembling a plurality of building blocks, each building block comprising a plurality of the strips of fibre material formed into a stack, and at least one interlayer disposed in between neighbouring strips in the stack.

Therefore, it is desired to reduce such negative influence on the aerodynamic performance of the wind turbine blade.

### SUMMARY

According to the invention, new methods of manufacturing a reinforcing structure and a wind turbine blade comprising a reinforcing structure, a reinforcing structure for a wind turbine blade, a wind turbine with a reinforcing structure and a modular system for manufacturing a reinforcing structure are provided, which may overcome or ameliorate at least one of the disadvantages of the prior art or which may provide a useful alternative.

It is an object of the present invention to provide a reinforcing structure for a wind turbine blade which is easily manufactured, handled and assembled. It is another object of the present invention to provide a reinforcing structure for a wind turbine blade which avoids or reduces the above-discussed misalignments, overlaps and defects. It is another object of the present invention to provide an improved method of manufacturing a reinforcing structure for a wind turbine blade. It is another object of the present invention to provide an improved method of manufacturing a wind turbine blade comprising a reinforcing structure. It is another object of the present invention to provide a modular system for manufacturing a reinforcing structure for a wind turbine blade, which improves manufacturing of the reinforcing structure.

One or more of these objects may be met by aspects of the present disclosure as described in the following.

According to a first aspect, the object is obtained by a method of manufacturing a wind turbine blade comprising a reinforcing structure, the wind turbine having a profiled contour including a pressure side and a suction side, and a leading edge and a trailing edge with a chord having a chord length extending therebetween, the wind turbine blade extending in a spanwise direction between a root end and a tip end, the method comprising the steps of: providing a blade shell mould, arranging a plurality of blade shell components in the blade shell mould, assembling of the reinforcing structure in the blade shell mould, the reinforcing structure comprising a plurality of strips of fibre material arranged into adjacent stacks of strips, wherein the step of assembling of the reinforcing structure in the blade shell mould comprises pre-assembling a plurality of building blocks, each building block comprising a plurality of the strips of fibre material formed into a stack, and at least one interlayer disposed in between neighbouring strips in the stack.

It has been found that pre-assembling building blocks prior to assembling a reinforcing structure for a wind turbine blade greatly reduces undesired overlaps and/or misplacement of the plurality of strips in the layered structure. The gaps between the adjacent building blocks or stacks allow for an improved distribution of resin between adjacent stacks, e.g. in a VARTM process. Thus, the method of manufacturing the wind turbine blade of the present invention is advantageous in maintaining the required tolerances and positions of the strips along the length of the building blocks or the stacks in the reinforcing structure, thus providing an improved reinforcing structure where misalignments and defects which may affect mechanical properties of the wind turbine blade may be avoided.

Pre-assembling building blocks provides pre-assembled and pre-infused sub-parts of the reinforcing structure, which can be combined in a most efficient way in a wind turbine blade shell mould or at a desired location outside the wind turbine blade shell mould. The pre-assembled and pre-infused building blocks fit better in a blade shell. This simplifies manufacturing the wind turbine blade as well as provides variability in the manufacturing process. This also provides an improved quality control due to simplifying the control of quality of separate pre-assembled building blocks. Separate pre-assembled or pre-infused building blocks are independent from each other and at the same time are attachable to each other and may be attached and/or interlocked with each other to form the reinforcing structure, for example, the reinforcing structure with an increased strength/stiffness.

Separate pre-assembled or pre-infused building blocks may be sufficiently twisted if required. The pre-assembled or pre-infused or pre-cured building blocks do not have to be close to each other in the blade shell mould to form a strong reinforcing structure. Separate pre-assembled or pre-infused building blocks may be optionally manufactured from different materials to improve the strength/stiffness of the reinforcing structure and correspondingly the strength/stiffness of the wind turbine blade. Using different materials may optimize use of carbon fibers in the wind turbine blade at the same time providing flexibility in design of the spar caps of the blades.

Pre-assembled building blocks may be formed as columns, comprising pultrusion planks, made e.g. from carbon, glass or hybrid glass/carbon material, and interlayers made e.g. from veil, woven, nonwoven, chopped strand, carbon, glass, dry, prepreg. The pre-assembled building blocks may also have covering layers made of glass or CSM (Chopped Strand Mat, glass-reinforced plastic). Manufacturing each building block separately provides an improved quality control for each building block, simplifies correcting defects in the building blocks, which leads to a decreased number of defects in the reinforcing structure. Further to avoiding overlaps and misalignment, it is to fit separately pre-assembled building blocks in the blade mould.

Assembling the reinforcing structure in the blade shell mould eliminates the necessity of transportation of the reinforcing structure. Moreover, the reinforcing structure may be assembled to be suitable for the particular blade construction and adapted to the wind turbine blade and its further use.

A wind turbine blade is usually manufactured from two shell halves, a pressure side shell half and a suction side shell half. The wind turbine blade extends in a spanwise direction between the tip and the root end of the wind turbine blade corresponding to the length of the wind turbine blade. The wind turbine blade further extends in a chordwise direction between the leading edge and the trailing edge of the wind turbine blade corresponding to the width of the wind turbine blade. The wind turbine blade further extends in a flapwise direction between the two shell halves of the wind turbine blade, corresponding to the thickness of the wind turbine blade.

Preferably, both shell halves comprise an elongate reinforcing structure, such as a spar cap or a main laminate or a resilience element.

In preferred embodiments, the reinforcing structure of the present invention is a spar cap or a main laminate for a wind turbine blade. In some embodiments, the reinforcing structure comprises a box spar. In other embodiments, the reinforcing structure comprises a spar beam. The reinforcing structure comprises a layered structure which is resin infused. Thus, reference to the reinforcing structure and the layered structure may sometimes be used interchangeably herein. The layered structure comprises a plurality of strips of fibre-reinforced material arranged into adjacent stacks of strips. The layered structure comprises a plurality of fibre-reinforced layers, wherein adjacent fibre-reinforced layers of the plurality of fibre-reinforced layers are separated by interlayers. Each fibre-reinforced layer comprises a strip from each of the adjacent stacks of strips. Preferably, each interlayer extends between the stacks of strips. Interlayer provides the layered structure without using an adhesive. Interlayers may be made e.g. from veil, woven, nonwoven, chopped strand, carbon, glass, dry, prepreg.

It is preferred that the reinforcing structure extends along the wind turbine blade in a spanwise direction. Typically, the reinforcing structure will extend over 60-95% of the blade length. Thus, the plurality of strips will typically extend in a spanwise direction of the blade and at least some of the strips have preferably a length corresponding to 60-95% of the blade length.

In some embodiments, the plurality of strips are pultruded planks, also called pultrusions, comprising fibre reinforced carbon fibres and/or glass fibres and/or hybrid fibers.

Each of the plurality of strips has a length, a thickness and a height, wherein the length is larger than the thickness, and the thickness is larger than the height.

It is particularly preferred that each strip comprises a pultruded fibre material, such as a pultruded carbon fibre material. In some embodiments, the reinforced material is carbon fibre and/or glass fibre. In some embodiments, each strip contains a carbon fibre material. In other embodiments, each strip contains a glass fibre material. In other embodiments, each strip contains a glass fibre material and a carbon fibre material. In some embodiments, the strips may not contain any polymer when laying up the strips. In such embodiments, a polymer resin is typically infused into strips following the lay-up. In an embodiment, the amount of carbon in the strips may be variable along the spanwise direction, e.g. the amount of carbon in the strips in a tip portion of the reinforcing structure may be decreased, and the mount of carbon in the strips in a root portion of the reinforcing structure may be increased.

Each stack of strips preferably comprises between 2-30 strips, such as between 3-20 strips successively arranged on top of each other in a flapwise direction of the wind turbine blade.

Each stack will usually also extend in a spanwise direction within the blade. In a midsection between a root end and a tip end, each stack may comprise 8-15 layers of strips, whereas towards the root end and towards the tip end the number of layered strips may decrease to 1-3. Thus, the stack of strips is preferably tapered towards both the root end and the distal end. Such configuration advantageously allows for a profile that is consistent with the thickness profile of the shell. Typically, two or more or three or more stacks of strips are arranged next to each other, adjacent to each other in a substantially chordwise direction.

In some embodiments, interlayers of the plurality of interlayers are resin flow promoting layers, such as a resin flow promoting fabric or mat. The interlayers are configured for facilitating resin flow between the strips of fibre-reinforced material. In some embodiments, the method of manufacturing the reinforcing structure further comprises the step of infusing resin into the layered structure comprises effecting resin flow through one or more of the interlayers from at least one of the stacks of strips to an adjacent stack of strips through the gaps between adjacent teeth of the plurality of teeth. In some embodiments, the plurality of interlayers comprises polymeric fibres and/or glass fibres and/or carbon fibres. In some embodiments, the interlayer is interleaved between the strips of each stack.

A difference between the strips of fibre-reinforced material and the interlayers is that the strips comprise cured resin, whereas the interlayers does not. Thus, resin can flow through the interlayers, while resin cannot flow through the strips.

A space between adjacent stacks in the layered structure/reinforcing structure is preferably between 0.1 mm to 5.0 mm, such as between 0.5 mm to 1.0 mm, as seen in a substantially chordwise direction. The space between adjacent stacks is preferably less than 0.5 mm, or less than 0.3 mm, as seen in a substantially chordwise direction. The layered structure/reinforcing structure has a length, a thickness and a height, wherein the length is larger than the thickness, and the thickness is typically larger than the height. The thickness of the layered/reinforcing structure may be smaller than the height. The length of the layered structure/reinforcing structure is defined by the length of the strips, the height of the layered structure/reinforcing structure is defined by the height of a stack of strips including the interlayers arranged between the strips, and the thickness of the layered structure/reinforcing structure is defined by the combined thickness of all of the adjacent stacks of strips including the space between the adjacent stacks.

In some embodiments, the length of the layered structure/reinforcing structure is in the range of 1 m to 100 m, such as in the range of 1 m to 10 m. In some embodiments, the height of the layered structure/reinforcing structure is in the range of 5 cm to 100 cm, preferably in the range of 5 cm to 50 cm. In some embodiments, the thickness of the layered structure/reinforcing structure is in the range of 10 cm to 300 cm.

In some embodiments, the reinforcing structure is assembled in a wind turbine blade shell mould. In other embodiments, the reinforcing structure is assembled offline, i.e., outside the wind turbine blade shell mould, and subsequently moved to a wind turbine blade shell mould. The reinforcing or the layered structure is typically resin infused in the wind turbine blade shell mould. However, in some embodiments, the reinforcing or the layered structure may also be resin infused outside the wind turbine blade shell mould and subsequently moved to the wind turbine blade shell mould.

Resin infusion may, for example, be done using vacuum-assisted resin transfer moulding. In other embodiments, a prepreg material can be used for the strips, which contains a fibre material preimpregnated with a resin system, such as an epoxy resin.

All relevant features and embodiments discussed above with respect to the method of manufacturing a wind turbine blade comprising a reinforcing structure likewise apply to the method of manufacturing a reinforcing structure as well as to the reinforcing structure for a wind turbine blade, the modular system and the wind turbine blade described below.

According to a second aspect, the object is obtained by a method of manufacturing a reinforcing structure for a wind turbine blade, the method comprising the steps of: assembling of the reinforcing structure, the reinforcing structure comprising a plurality of strips of fibre material arranged into adjacent stacks of strips, wherein the step of assembling of the reinforcing structure comprises pre-assembling a plurality of building blocks, each building block comprising a plurality of the strips of fibre material formed into a stack, and at least one interlayer disposed in between neighbouring strips in the stack.

The step of pre-assembling a plurality of building blocks provides pre-assembled and pre-infused building blocks or stacks or piles, which are compatible with each other and are attachable to each other by resin infusion. The method of manufacturing a reinforcing structure as well as the method of manufacturing the wind turbine blade with the reinforcing structure according to the present disclosure basically define a two-stage (or two-step) moulding or infusing. The first stage includes pre-assembling the building blocks or stacks or piles comprising strips of fibre material and interlayers, wherein each stack or building block or pile is moulded together. The second stage includes assembling the pre-infused building blocks or stacks or piles in the reinforcing structure, e.g. by infusing resin into each of the stacks or the building blocks or the piles, or by infusing resin into the blade turbine mould. The separate and independent stacks or building blocks or piles are thus united into one structure, i.e., the reinforcing structure.

In the following, preferred embodiments according to the above aspects defining a method of manufacturing a wind turbine blade with a reinforcing structure and a reinforcing structure for a wind turbine blade are described. The various embodiments may be combined in any conceived combination.

According to a preferred embodiment, the step of assembling of the reinforcing structure comprises assembling of the reinforcing structure at a location different from the blade shell mould and subsequently moving of the reinforcing structure to the blade shell mould. Assembling of the reinforcing structure at a location different from the blade shell mould simplifies the process of manufacturing the wind turbine blade due to using the assembled reinforcing structure. There is no need to provide the tools and machines for assembling the reinforcing structure at the location of the blade shell mould.

According to a preferred embodiment, the step of pre-assembling the plurality of building blocks comprises laying up strips in at least one building block of the plurality of building blocks onto each other so that at least one block of the plurality of building blocks is a column of strips. The columns of strips are easily combinable with each other to form the reinforcing structure of desired width. Upon forming the reinforcing structure by infusing resin into the stacks of strips, the columns are attached to each other by filling the gaps between the columns by resin infusion.

According to a preferred embodiment, the step of pre-assembling the plurality of building blocks comprises arranging strips in at least one building block of the plurality of building blocks adjacent to each other so that at least one block of the plurality of building blocks is a row of strips. The rows of strips provide flexibility and accuracy upon providing a desired thickness of the reinforcing structure.

According to a preferred embodiment, the step of pre-assembling the plurality of building blocks comprises, in at least one building block of the plurality of building blocks, both laying up strips onto each other and arranging strips adjacent to each other so that at least one building block of the plurality of building blocks is a combination of columns and rows of strips. In an embodiment, the at least one building block may comprise three columns of strips and seven rows of strips. The combination of columns and rows of strips in separate building blocks provides an enhanced opportunity of combining different building blocks together and flexibility in providing the strength of the reinforcing structure along the spanwise direction of the reinforcing structure.

According to a preferred embodiment, not according to the invention, the method further comprising, after the step of assembling of the reinforcing structure in the blade shell mould, infusing resin into each of the stacks of strips to form the reinforcing structure.

According to a preferred embodiment, after the step of assembling of the reinforcing structure in the blade shell mould, the step of infusing resin into the blade shell mould to form the reinforcing structure is perfomed.

According to a preferred embodiment, the step of pre-assembling of the plurality of building blocks comprises forming at least two of the plurality of building blocks simultaneously by multi-cavity injection moulding. The manufacturing of the reinforcing structure may be less time consuming in this case. Alternatively, the step of pre-assembling of the plurality of building blocks may optionally comprise single-cavity injection moulding or simple moulding.

According to a preferred embodiment, the step of pre-assembling of the plurality of building blocks comprises forming the plurality of building blocks by pultrusion at a location of the wind turbine blade shell mould. This may be performed, for example, using a pultrusion machine arranged next to the blade mould. In this case no coiling or the plates of the strips for transportation would be required.

According to a preferred embodiment, the plurality of strips is formed from a plurality of plates, optionally by cutting the plates, wherein each of the plurality of plates has a height/thickness of preferably between 3 and 10 mm, more preferably between 4 and 7 mm, a width of preferably between 20 and 300 mm, more preferably between 80 and 150 mm and a length of between 50 and 150 m, preferably between 50 and 100 m, more preferably between 70 and 100 m, and wherein the plurality of plates are coiled up and moved to a desired location, such as the location of the wind turbine blade shell mould, prior to forming the plurality of strips. The plates are convenient for transportation. According to an embodiment, each of the plurality of plates has a height/thickness of 5 mm and a width of 100 mm. According to an embodiment, each of the plurality of plates has a height/thickness of 5 mm, a width of 100 mm and a length of 300 m,

According to a preferred embodiment, the at least one interlayer is a resin flow promoting interlayer configured for facilitating resin flow between the strips of fibre material, and wherein the step of infusing resin into each of the stacks of strips comprises effecting resin flow through the at least one interlayer.

According to a preferred embodiment, the step of assembling of the reinforcing structure comprises arranging the plurality of building blocks in the reinforcing structure so that respective strips and interlayers of at least two of the plurality of building blocks are arranged in common or same planes. Preferably, respective strips and interlayers of at least two of the plurality of building blocks are arranged in parallel planes. Basically, the at least two building blocks are arranged adjacent to each other in such a way so that respective strips of the adjacent building blocks form common strip layer, where the strips in one strip layer are separated by gaps or interlayers. In an alternative embodiment, respective strips and interlayers of at least two of the plurality of building blocks may be arranged in planes arranged under the angle to each other, e.g. strips of one building block may be tapered relative to the respective strip of adjacent building blocks. In an alternative embodiment, at least one strip of the building block may be tapered relative to at least one other strip of the same building block.

According to a preferred embodiment, the reinforcing structure is a spar cap for the wind turbine blade and optionally the plurality of strips of fibre material are pultruded planks comprising fibre reinforced carbon fibres and/or glass fibres. In an embodiment, the reinforcing structure is a resilience element.

All relevant features and embodiments discussed above with respect to the method of manufacturing a wind turbine blade comprising a reinforcing structure likewise apply to the method of manufacturing a reinforcing structure as well as to the reinforcing structure for a wind turbine blade, the modular system and the wind turbine blade described below.

According to a third aspect, the object is obtained by a reinforcing structure for a wind turbine blade, the reinforcing structure comprising a plurality of strips of fibre material arranged into adjacent stacks of strips, wherein the reinforcing structure comprises a plurality of pre-assembled building blocks, each building block comprising a plurality of the strips of fibre material formed into a stack, and at least one interlayer disposed in between neighbouring strips in the stack.

The reinforcing structure in accordance with the aspect comprises an increased strength/stiffness thus providing an improved strength/stiffness of the wind turbine blade.

According to a preferred embodiment, the strips in the at least one building block of the plurality of building blocks have the same size.

According to a preferred embodiment, each of the plurality of strips in the at least one building block of the plurality of building blocks has a height/thickness of preferably between 3 and 10 mm, more preferably between 4 and 7 mm, most preferably 5 mm and a width of preferably between 20 and 300 mm, more preferably between 80 and 150 mm, most preferably 100 mm.

According to a preferred embodiment, the strips in the at least one building block of the plurality of building blocks have different sizes, optionally the strips in the at least one building block of the plurality of building blocks have different length or different thickness. Different length of columns/strips provides variable stiffness along the reinforcing structure, thus providing flexibility in providing the reinforcing structure suitable for specific blade shells. Different thickness of the strips in one building block provides flexibility in assembling the building block.

According to a preferred embodiment, separate building blocks of the plurality of building blocks are attached by moulding, optionally by resin infusion.

According to a preferred embodiment, respective strips and interlayers of at least two building blocks of the plurality of building blocks are arranged in common or same planes. Preferably, respective strips and interlayer of at least two of the plurality of building blocks are arranged in parallel planes. Basically, the at least two building blocks are arranged adjacent to each other in such a way so that respective strips of the adjacent building blocks form common strip layer where the strips in one strip layer are separated by gaps or interlayers.

According to a preferred embodiment, at least two building blocks of the plurality of building blocks comprise same number of strips and interlayers.

According to a preferred embodiment, at least two building blocks of the plurality of building blocks comprise different number of strips and interlayers.

According to a preferred embodiment, at least two building blocks of the plurality of building blocks have shapes compatible to each other, and the corresponding building blocks with compatible shapes or profiles or contours are attached to each other. The at least two building blocks may comprise strips of different length and/or thickness, which form shapes of the at least two building blocks so that shapes of the at least two building blocks are compatible to each other due to corresponding compatibility of the strips in the at least two building blocks, preferably due to compatibility of the length and/or thickness of corresponding strips in the at least two building blocks. Due to compatible shapes the at least two building blocks in the plurality of building blocks form parts or pieces or puzzle pieces of the reinforcing structure, which are assembled together to form the reinforcing structure. Due to different thicknesses of the strips, when corresponding building blocks are attached together, gaps between the corresponding building blocks have shape of broken line or polyline. Different length and/or thickness of the strips in the building blocks provides different transitions between the building blocks, thus ensuring variable stiffness along the reinforcing structure and sufficient flexibility of the reinforcing structure.

According to a preferred embodiment, the at least two building blocks of the plurality of building blocks have different sizes, optionally different length, optionally different thickness.

According to a preferred embodiment, gaps between the at least two building blocks of the plurality of building blocks are of different sizes. In an embodiment, the gaps between the at least two building blocks are filled with resin.

According to a preferred embodiment, the elements of the reinforcing structure, including the strips and the interlayers, are embedded in a cured resin.

According to a preferred embodiment, the reinforcing structure is covered by a ply, the ply is optionally made from one of: Chlor Sulfonated Methylene, CSM (Chopped Strand Mat, glass-reinforced plastic), unidirectional tape, carbon biax, peel ply.

All relevant features and embodiments discussed above with respect to the reinforcing structure for a wind turbine blade likewise apply to the modular system, and the wind turbine blade described below.

According to fourth aspect, the object is obtained by a modular system for manufacturing a reinforcing structure for a wind turbine blade in at least two different spatial arrangements, the system comprising: a plurality of pre-assembled building blocks, each building block comprising a plurality of the strips of fibre material formed into a stack, and at least one interlayer disposed in between neighbouring strips in the stack, wherein pre-assembled building blocks in the plurality of pre-assembled building blocks are attachable to each other so that the modular system is operable to form the reinforcing structure comprising a plurality of strips of fibre material arranged into adjacent stacks of strips.

The modular systems provide the plurality of building blocks which are mated or compatible with each other and attachable to each other to form different reinforcing structures.

According to a fifth aspect, a wind turbine blade comprising one or more reinforcing structures is described herein.

The method of manufacturing of the wind turbine blade, the method of manufacturing the reinforcing structure for the wind turbine blade, the reinforcing structure, the modular system and the wind turbine blade described in this section may optionally be supplemented by any of the features, functionalities and details disclosed herein (in the entire document), both individually and taken in combination.

### BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.
Fig. 1 is a schematic illustration of a wind turbine,
Fig. 2 is a schematic illustration of a three-dimensional view of a wind turbine blade,
Fig. 3 is a schematic illustration of a cross-sectional view of a wind turbine blade,
Fig. 4 is a schematic illustration of a top view of a reinforcing structure in a wind turbine blade according to the prior art illustrating misalignments of strips in the reinforcing structure,
Fig. 5 is a schematic illustration of a cross-sectional view of a reinforcing structure according to the prior art illustrating misalignments of strips in the reinforcing structure,
Fig. 6 is a schematic illustration of a cross-sectional view of a reinforcing structure according to the prior art illustrating horizontal misalignments of strips in the reinforcing structure,
Fig. 7 is a schematic illustration of a cross-sectional view of a reinforcing structure according to the prior art illustrating overlaps of strips in the reinforcing structure,
Fig. 8 shows steps in a method of manufacturing a wind turbine blade comprising a reinforcing structure,
Fig. 9 shows steps in a method of manufacturing a reinforcing structure,
Fig. 10 is a schematic illustration of a cross-sectional view of a reinforcing structure,
Fig. 11 is a schematic illustration of pre-assembled building blocks of a modular system,
Fig. 12 is a schematic illustration of a pre-assembled building block of a modular system,
Fig. 13 is a schematic illustration of pre-assembled building blocks of a modular system,
Fig. 14 is a schematic illustration of pre-assembled building blocks of a modular system,
Fig. 15 is a schematic illustration of pre-assembled building blocks of a modular system,
Fig. 16 is a schematic illustration of a top view of a reinforcing structure in a blade shell mould,
Fig. 17 is a schematic illustration of a cross-sectional view of a reinforcing structure in a blade shell mould,
Fig. 18 is a schematic illustration of a cross-sectional view of a reinforcing structure in a blade shell mould.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

In the following, a number of exemplary embodiments are described in order to understand the invention.

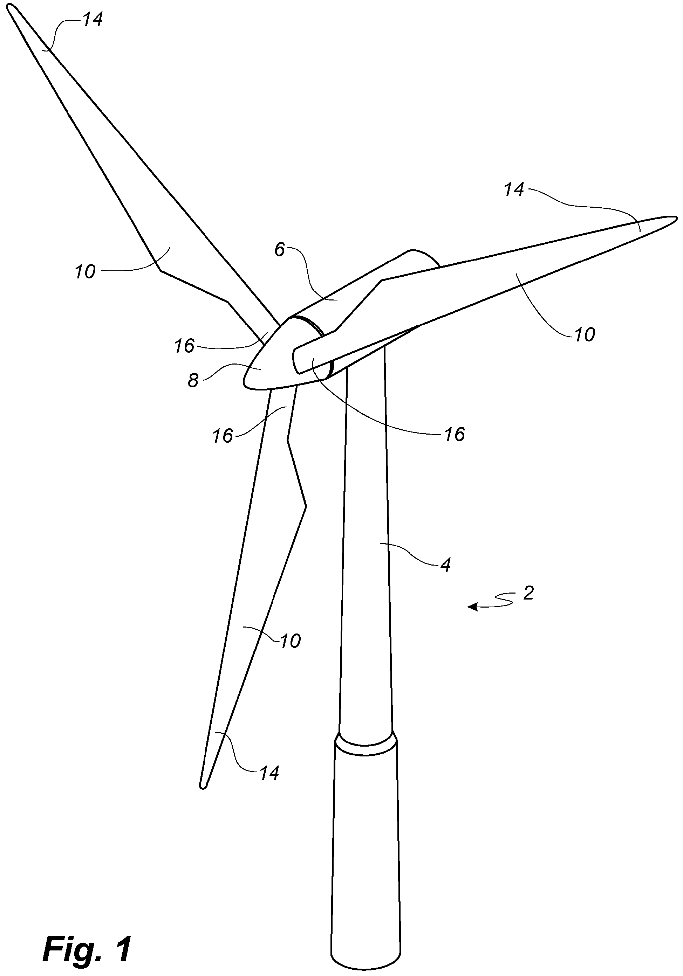

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8.

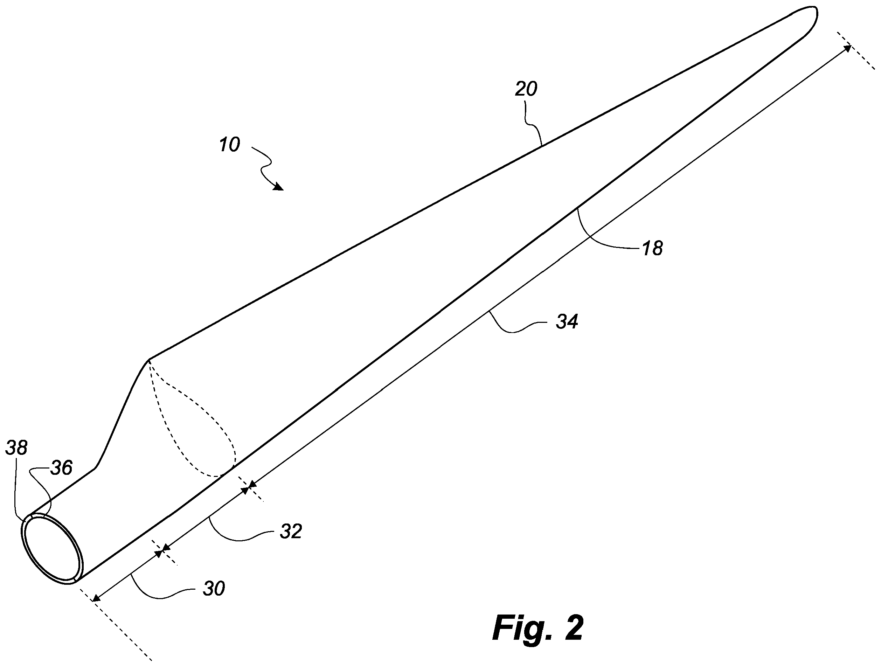

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area. The transition region 32 has a transitional profile gradually changing from the circular or elliptical shape of the root region 30 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub. Fig. 2 also illustrates the longitudinal extent, length or longitudinal axis of the blade.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge 20 of the blade 10.

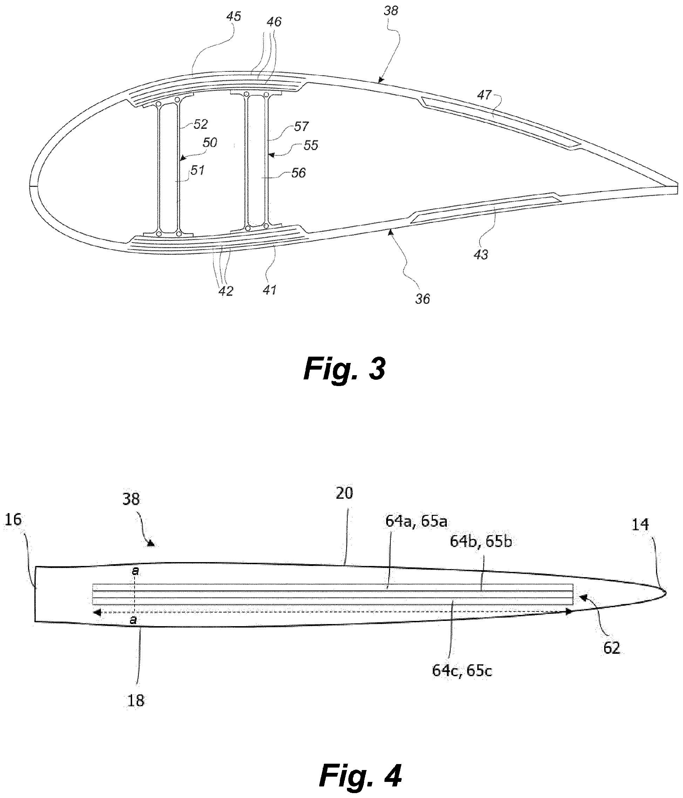

Fig. 3 shows a schematic view of a cross section of the blade shown in Fig. 2. As previously mentioned, the blade 10 comprises a pressure side shell part 36 and a suction side shell part 38. The pressure side shell part 36 comprises a spar cap 41, also called a main laminate, which constitutes a load-bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 36 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The second shear web 55 comprises a shear web body and two web foot flanges. The shear web body comprises a sandwich core material 56, such as balsawood or foamed polymer, covered by a number of skin layers 57 made of a number of fibre layers.

The blade shells 36, 38 may comprise further fibre-reinforcement at the leading edge and the trailing edge. Typically, the shell parts 36, 38 are bonded to each other via glue flanges.

Fig. 4 is a schematic top view of a shell half 38 of a wind turbine blade comprising a reinforcing structure 62 according to the prior art. The reinforcing structure 62 is in the form of a spar cap, arranged within the shell half 38. In the illustrated embodiment, the reinforcing structure 62 comprises three adjacent stacks 65a, 65b, 65c of strips of fibre-reinforced material arranged adjacent to each other. Only the uppermost strip 64a, 64b, 64c of each stack 65a, 65b, 65c can be seen in Fig. 4.

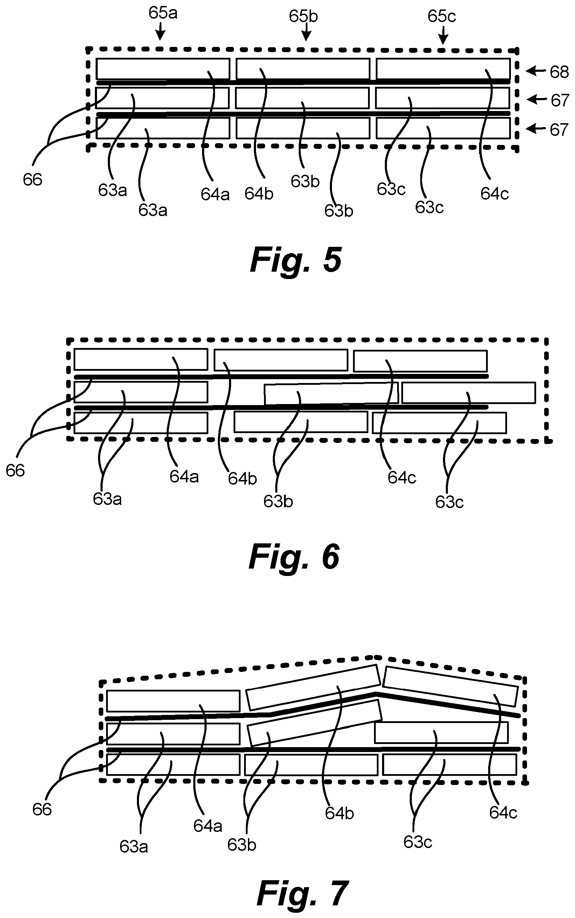

Fig. 5 is a schematic cross-sectional view of the reinforcing structure 62 of Fig. 4 through the cross-section a-a illustrated in Fig. 4. As can be seen in Fig. 5, each stack 65a, 65b, 65c of the reinforcing structure 62 comprises three strips 63a, 64a, 63b, 64b, 63c, 64c. The nine strips 63a, 64a, 63b, 64b, 63c, 64c of fibre-reinforced material are arranged into adjacent stacks 65a, 65b, 65c of strips forming a layered structure with three fibre-reinforced layers 67, 68, including an uppermost fibre-reinforced layer 68, wherein each fibre-reinforced layer 67, 68 comprises a strip 63a, 64a, 63b, 64b, 63c, 64c from each of the adjacent stacks 65a, 65b, 65c of strips. Furthermore, the reinforcing structure 62 of Fig. 5 comprises two interlayers 66 arranged between the three fibre-reinforced layers 67, 68, such that adjacent fibre-reinforced layers 67, 68 are separated by an interlayer 66.

Figs. 6 and 7 illustrate how the strips 63a, 64a, 63b, 64b, 63c, 64c can move within the reinforcing structure 62 of Fig. 4 and cause misalignments and overlaps of the strips 63a, 64a, 63b, 64b, 63c, 64c. In Fig. 6, the strips 63b, 63c have moved horizontally, whereas in Fig. 7, the strips 63b, 64b, 63c, 64c have overlapped. As can be seen in Figs. 6 and 7, such misalignments and overlaps affect the final shape of the reinforcing structure 62, which is not desired. This problem is addressed by the present disclosure which has been found to result in greatly improved properties of the final reinforcing structure 62 with no misalignments or related structural defects of the reinforcing structure 62 or the stacks of fibre-reinforced polymer.

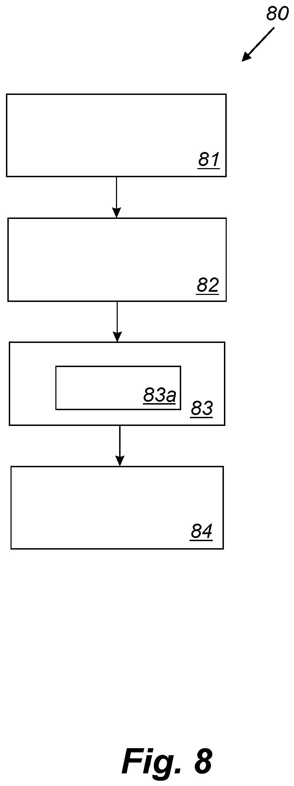

In the following, the method 80 of manufacturing a wind turbine blade according to the present disclosure is described. Fig. 8 shows steps in a method of manufacturing a wind turbine blade comprising a reinforcing structure.

In a first step 81, a blade shell mould is provided. In a second step 82, a plurality of blade shell components is arranged in the blade shell mould. The reinforcing structure comprising a plurality of strips of fibre material arranged into adjacent stacks of strips is assembled in a third step 83.

The step 83 may be optionally performed at a location different from the blade shell mould and include subsequently moving of the assembled reinforcing structure to the blade shell mould.

The step 83 comprises a step 83a of pre-assembling a plurality of building blocks, wherein each building block comprises a plurality of the strips of fibre material formed into a stack, and at least one interlayer disposed in between neighbouring strips in the stack. In some of the embodiments, the step 83a may optionally comprise laying up strips in at least one building block of the plurality of building blocks onto each other or arranging strips in at least one building block of the plurality of building blocks adjacent to each other or both. Thus, the pre-assembled plurality of building blocks may comprise at least one column of strips or at least one row of strips or a combination of columns and rows of strips. In an embodiment, at least one building block of the pre-assembled plurality of building blocks may comprise three columns of strips and seven rows of strips.

The plurality of strips of fibre material is optionally formed from a plurality of plates, optionally by cutting the plates. If the step 83a of pre-assembling a plurality of building blocks is performed at the location of the wind turbine blade shell mould, the plurality of plates is optionally moved to the location of the wind turbine blade shell mould coiled up or curled or circled into coils or rolls for the ease of transportation. Each of the plurality of plates optionally has a height/thickness of preferably between 3 and 10 mm, more preferably between 4 and 7 mm, most preferably 5 mm, a width of preferably between 20 and 300 mm, more preferably between 80 and 150 mm, most preferably 100 mm, and a length of typically between 50 and 150 m, preferably between 50 and 100 m, more preferably between 70 and 100 m. Each of the plurality of plates may optionally have a length of 300 m.

The step 83a may optionally comprise multi-cavity injection moulding, wherein the plurality of building blocks is formed simultaneously by multi-cavity injection moulding. This simultaneous forming of the plurality of building blocks may be performed at a location different from the blade shell mould or at a location of the blade shell mould. Alternatively, the step 83a may optionally comprise single-cavity injection moulding or simple moulding, for example, using multi cavity tool, or using 100 mm wide cavities.

The step 83a may optionally comprise pultrusion, wherein the plurality of the building blocks is formed by pultrusion. Forming the plurality of the building blocks by pultrusion is preferably performed at a location of the wind turbine shell mould. However, this step may be optionally performed at a location different from the blade shell mould.

The step 83 may optionally comprise arranging the plurality of blocks in the reinforcing structure so that strips and interlayers of at least some of the plurality of building blocks are arranged in common or same, preferably parallel, planes. In an embodiment, the interlayers of at least some of the plurality of building blocks form interlayers of the reinforcing structure.

In an optional fourth step 84, resin is infused into the blade shell mould to form the reinforcing structure. The step 84 may optionally comprise infusing resin into each of the stacks of strips to form the reinforcing structure. The step 84 may optionally comprise effecting resin flow through the at least one interlayer, wherein the at least one interlayer is a resin flow promoting interlayer configured for facilitating resin flow between the strips of fibre material.

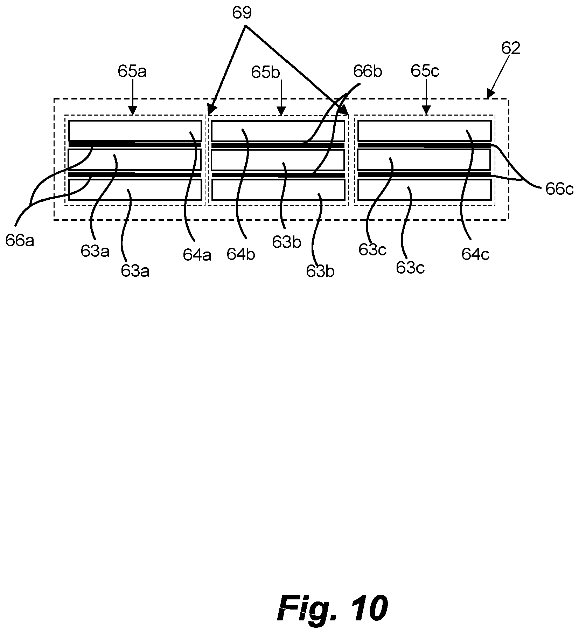

As a result of performing the steps of the method 80, a wind turbine blade is manufactured, the wind turbine blade comprising a reinforcing structure, for example, the one shown in Fig. 10, which comprises no misalignments or related structural defects.

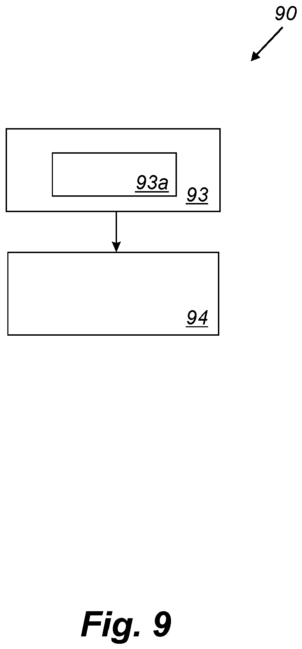

Fig. 9 shows steps in a method 90 of manufacturing a reinforcing structure for a wind turbine blade according to the present disclosure.

In a first step 93, a reinforcing structure comprising a plurality of strips of fibre material arranged into adjacent stacks of strips is assembled.

The step 93 may be optionally performed in a blade shell mould or at a location different from the blade shell mould and include subsequently moving of the assembled reinforcing structure to the blade shell mould.

The step 93 comprises a step 93a of pre-assembling a plurality of building blocks, wherein each building block comprises a plurality of the strips of fibre material formed into a stack, and at least one interlayer disposed in between neighbouring strips in the stack. In some of the embodiments, the step 93a may optionally comprise laying up strips in at least one building block of the plurality of building blocks onto each other or arranging strips in at least one building block of the plurality of building blocks adjacent to each other or both. Thus, the pre-assembled plurality of building blocks may comprise at least one column of strips or at least one row of strips or a combination of columns and rows of strips. In an embodiment, at least one building block of the pre-assembled plurality of building blocks may comprise three columns of strips and seven rows of strips.

The plurality of strips of fibre material is optionally formed from a plurality of plates, optionally by cutting the plates. If the step 93a of pre-assembling a plurality of building blocks is performed at the location of the wind turbine blade shell mould, the plurality of plates is optionally moved to the location of the wind turbine blade shell mould coiled up or curled or circled into coils or rolls for the ease of transportation. Each of the plurality of plates optionally has a height/thickness of preferably between 3 and 10 mm, more preferably between 4 and 7 mm, most preferably 5 mm, a width of preferably between 20 and 300 mm, more preferably between 80 and 150 mm, most preferably 100 mm, and a length of typically between 50 and 150 m, preferably between 50 and 100 m, more preferably between 70 and 100 m. Each of the plurality of plates may optionally have a length of 300 m.

The step 93a may optionally comprise multi-cavity injection moulding, wherein the plurality of building blocks is formed simultaneously by multi-cavity injection moulding. This simultaneous forming of the plurality of building blocks may be performed at a location different from the blade shell mould or at a location of the blade shell mould. Alternatively, the step 93a may optionally comprise single-cavity injection moulding or simple moulding.

The step 93a may optionally comprise pultrusion, wherein the plurality of the building blocks is formed by pultrusion. Forming the plurality of the building blocks by pultrusion is preferably performed at a location of the wind turbine shell mould. However, this step may be optionally performed at a location different from the blade shell mould.

The step 93 may optionally comprise arranging the plurality of blocks in the reinforcing structure so that strips and interlayers of at least some of the plurality of building blocks are arranged in common or same, preferably parallel, planes. In an embodiment, the interlayers of at least some of the plurality of building blocks form interlayers of the reinforcing structure.

In an optional second step 94, resin is infused into the blade shell mould to form the reinforcing structure. The step 94 may optionally comprise infusing resin into each of the stacks of strips to form the reinforcing structure. The step 94 may optionally comprise effecting resin flow through the at least one interlayer, wherein the at least one interlayer is a resin flow promoting interlayer configured for facilitating resin flow between the strips of fibre material.

As a result of performing the steps of the method 90, a reinforcing structure is manufactured, for example, the one shown in Fig. 10, which comprises no misalignments or related structural defects.

Fig. 10 is a schematic illustration of a cross-sectional view of a reinforcing structure 62 according to the present invention. The reinforcing structure 62 may be performed, for example, by the methods described referring to Figs. 8-9.

Fig. 10 shows the reinforcing structure 62 for a wind turbine blade, which comprises a plurality of strips 63a, 64a, 63b, 64b, 63c, 64c of fibre material arranged into adjacent stacks 65a, 65b, 65c of strips. The strips63a, 64a, 63b, 64b, 63c, 64c may be made e.g. from carbon, glass or hybrid glass/carbon material. The reinforcing structure 62 comprises a plurality of pre-assembled building blocks 65a, 65b, 65c, wherein each building block 65a, 65b, 65c comprises a plurality of the strips 63a, 64a, 63b, 64b, 63c, 64c of fibre material formed into a stack, and at least one interlayer 66a, 66b, 66c disposed in between neighbouring strips 63a, 64a, 63b, 64b, 63c, 64c in the stack. The interlayers 66a, 66b, 66c may be made e.g. from veil, woven, nonwoven, chopped strand, carbon, glass, dry, prepreg. The stacks 65a, 65b, 65c are essentially pre-assembled blocks 65a, 65b, 65c, a plurality of which is combined in the reinforcing structure 62.

Fig. 10 shows the reinforcing structure 62 formed from three pre-assembled building blocks 65a, 65b, 65c. Three pre-assembled building blocks 65a, 65b, 65c form three stacks 65a, 65b, 65c in the reinforcing structure 62. As can be seen in Fig. 10, each building block or stack 65a, 65b, 65c of the reinforcing structure 62 comprises three strips 63a, 64a, 63b, 64b, 63c, 64c. The nine strips 63a, 64a, 63b, 64b, 63c, 64c of fibre-reinforced material are arranged into adjacent building blocks or stacks 65a, 65b, 65c of strips. The three strips 63a, 64a, 63b, 64b, 63c, 64c in each building block or stack 65a, 65b, 65c are laid up onto each other to form a column of strips. The three strips 63a, 64a, 63b, 64b, 63c, 64c in each building block or stack 65a, 65b, 65c have the same size. Each of the adjacent building blocks or stacks 65a, 65b, 65c comprises two interlayers 66a, 66b, 66c arranged between the three strips 63a, 64a, 63b, 64b, 63c, 64c, such that adjacent strips 63a, 64a, 63b, 64b, 63c, 64c are separated by an interlayer 66a, 66b, 66c. The upper strips 64a, 64b, 64c of the adjacent building blocks or stacks 65a, 65b, 65c are arranged in one common plane. The respective strips 63a, 63b, 63c of the adjacent building blocks or stacks 65a, 65b, 65c are arranged in common planes parallel to the plane of the upper strips 64a, 64b, 64c. The strips 63a, 64a, 63b, 64b, 63c, 64c of the adjacent building blocks or stacks 65a, 65b, 65c substantially form the rows of strips parallel to each other. Gaps 69 are formed between the building blocks or stacks 65a, 65b, 65c combined into the reinforcing structure 62. Two gaps 69 are of the same size. In an embodiment, gaps 69 may be of different sizes. In an embodiment, the pre-assembled building blocks 65a, 65b, 65c may also have covering layers made of glass or CSM (Chopped Strand Mat, glass-reinforced plastic).

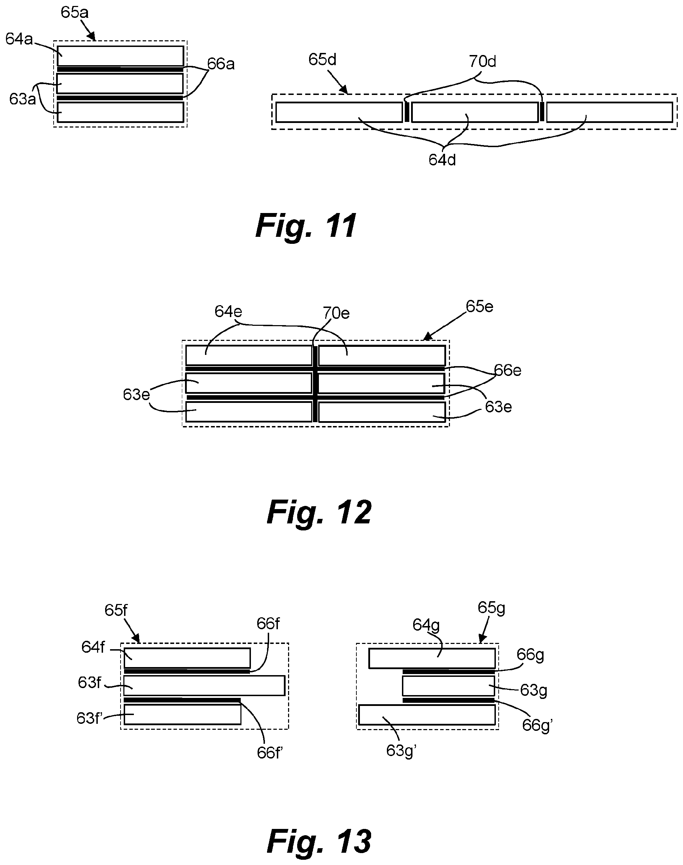

Figs. 11-14 show schematic illustrations of a modular system, particularly of pre-assembled building blocks of the modular system, for manufacturing the reinforcing structure according to the present invention. The modular system comprising the pre-assembled building blocks shown in Figs. 11-14 may be used to manufacture the reinforcing structure, for example, the one shown in Fig. 10, or the wind turbine blade comprising such reinforcing structure, for example, by the methods described with the reference to Figs. 8-9.

Figs. 11-14 show a cross-sectional view of different pre-assembled building blocks.

Fig. 11 shows two different building blocks, which may be used in the modular system. The shown building blocks may be pre-assembled and combined in one modular system in an embodiment.

Pre-assembled building block 65a comprises three strips 63a, 64a of fibre material arranged into a stack of strips. The strips 63a, 64a may be made e.g. from carbon, glass or hybrid glass/carbon material. The three strips 63a, 64a are laid up onto each other to form a column of strips. The three strips 63a, 64a have the same size. In an embodiment strips 63a, 64a may be of different sizes. The building block 65a comprises two interlayers 66a arranged between the three strips 63a, 64a such that adjacent strips 63a, 64a are separated by an interlayer 66a. The interlayers 66a may be made e.g. from veil, woven, nonwoven, chopped strand, carbon, glass, dry, prepreg. The building block 65a has a rectangular cross-section.

Pre-assembled building block 65d comprises three strips 64d of fibre material arranged into a horizontal stack of strips. The strips 64d may be made e.g. from carbon, glass or hybrid glass/carbon material. The three strips 64d are arranged adjacent to each other to form a row of strips. The three strips 64d have the same size. In an embodiment, strips 64d may be of different sizes. The building block 65d have two vertical interlayers 70d arranged between the three strips 64d such that adjacent strips 64d are separated by a vertical interlayer 70d. The interlayers 70d may be made e.g. from veil, woven, nonwoven, chopped strand, carbon, glass, dry, prepreg. Two vertical interlayers 70d have the same size, e.g. the same thickness. In an embodiment, the vertical interlayers 70d may be of different sizes, e.g. have different thickness. The building block 65d has a rectangular cross-section.

In an embodiment, the pre-assembled building blocks 65a and 65d may also have covering layers made of glass or CSM (Chopped Strand Mat, glass-reinforced plastic).

Fig. 12 shows pre-assembled building block 65e, which may be used in the modular system.

The pre-assembled building block 65e comprises six strips 63e, 64e arranged into a stack of strips. The strips 63e, 64e may be made e.g. from carbon, glass or hybrid glass/carbon material. The stack of strips of the building block 65e comprises two columns and three rows. The six strips 63e, 64e are both laid onto each other arranged adjacent to each other. The six strips 63e, 64e are combined into two groups of strips where the strips 63e, 64e are laid onto each other in each of two groups to form columns. Two columns are arranged adjacent to each other to form the building block 65e. At the same time, the six strips 63e, 64e are combined into three groups of strips where the strips 63e, 64e are arranged adjacent to each other in each of three groups to form rows. Three rows are arranged laid onto each other to form the building block 65e. Basically six strips 63e, 64e are combined into a stack having two columns and three rows where adjacent strips 63e, 64e are separated by horizontal and vertical interlayers 66e, 70e. The interlayers 66e, 70e may be made e.g. from veil, woven, nonwoven, chopped strand, carbon, glass, dry, prepreg. The building block 65e has two interlayers 66e arranged horizontally between those of six strips 63e, 64e laid onto each other such that adjacent strips 63e, 64e are separated by an interlayer 66e. The building block 65e has one vertical interlayer 70e arranged between those of six strips 63e, 64e arranged adjacent to each other in a horizontal plane such that strips 63e, 64e adjacent horizontally to each other are separated by a vertical interlayer 70e. The six strips 63a, 64a have the same size. In an embodiment strips 63a, 64a may be of different sizes. The interlayers 66e and the vertical interlayer 70e have the same thickness. In an embodiment the interlayers 66e and the vertical interlayer 70e may have different thickness. The building block 65e has a rectangular cross-section. In an embodiment, the pre-assembled building block 65e may also have covering layer made of glass or CSM (Chopped Strand Mat, glass-reinforced plastic).

Fig. 13 shows two different building blocks, which may be used in the modular system. The shown building blocks may be pre-assembled and combined in one modular system in an embodiment.

Pre-assembled building block 65f comprises three strips 63f, 63f', 64f of fibre material arranged into a stack of strips. The strips 63f, 63f', 64f may be made e.g. from carbon, glass or hybrid glass/carbon material. The three strips 63f, 63f', 64f are laid up onto each other to form a column of strips. The three strips 63f, 63f', 64f are of different sizes. The three strips 63f, 63f', 64f have different thickness. The thickness of middle strip 63f is larger than the thickness of each of upper strip 64f and bottom strip 63f'. The thickness of the bottom strip 63f' is smaller than the thickness of each of the upper strip 64f and the middle strip 63f. The building block 65f comprises two interlayers 66f, 66f' arranged between the three strips 63f, 63f', 64f such that adjacent strips 63f, 63f', 64f are separated by an interlayer 66f, 66f'. The interlayers 66f, 66f' may be made e.g. from veil, woven, nonwoven, chopped strand, carbon, glass, dry, prepreg. The interlayer 66f separating the upper strip 64f and the middle strip 63f has the same thickness as the upper strip 64f. The interlayer 66f' separating the middle strip 63f and the bottom strip 63f' has the same thickness as the bottom strip 63f'.

Pre-assembled building block 65g comprises three strips 63g, 63g', 64g of fibre material arranged into a stack of strips. The three strips 63g, 63g', 64g are laid up onto each other to form a column of strips. The three strips 63g, 63g', 64g are of different sizes. The three strips 63g, 63g', 64g have different thickness. The thickness of middle strip 63g is smaller than the thickness of both of upper strip 64g and bottom strip 63g'. The thickness of the bottom strip 63g' is larger than the thickness of both of the upper strip 64g and the middle strip 63g. The building block 65g comprises two interlayers 66g, 66g' arranged between the three strips 63g, 63g', 64g such that adjacent strips 63g, 63g', 64g are separated by an interlayer 66g, 66g'. The interlayers 66g, 66g' may be made e.g. from veil, woven, nonwoven, chopped strand, carbon, glass, dry, prepreg. Both the interlayer 66g separating the upper strip 64g and the middle strip 63g as well as the interlayer 66g' separating the middle strip 63g and the bottom strip 63g' have the same thickness as the middle strip 63g.

The building blocks 65f and 65g are compatible with each other, e.g. each of the building blocks 65f and 65g has the shape compatible with the shape of another building block of these two building blocks. The building blocks 65f and 65g are attachable together to form a portion of the reinforcing structure having a rectangular cross-section. In an embodiment, the pre-assembled building blocks 65f and 65g may also have covering layers made of glass or CSM (Chopped Strand Mat, glass-reinforced plastic).

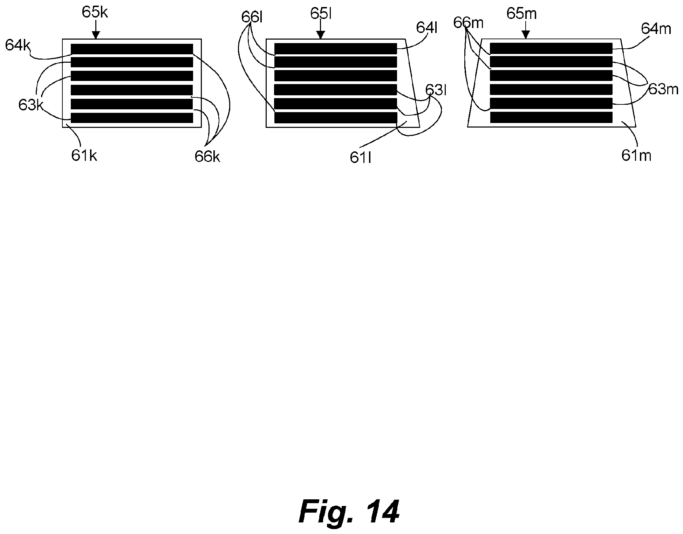

Fig. 14 shows three different building blocks, which may be used in the modular system. The shown building blocks may be pre-assembled and combined in one modular system in an embodiment.

Pre-assembled building block 65k comprises six strips 63k, 64k of fibre material arranged into a stack of strips. The strips 63k, 64k may be made e.g. from carbon, glass or hybrid glass/carbon material. The six strips 63k, 64k are laid up onto each other to form a column of strips. The six strips 63k, 64k have the same size. In an embodiment strips 63k, 64k may be of different sizes. The building block 65k comprises five interlayers 66k arranged between the six strips 63k, 64k such that adjacent strips 63k, 64k are separated by an interlayer 66k. The interlayers 66k may be made e.g. from veil, woven, nonwoven, chopped strand, carbon, glass, dry, prepreg. The building block 65k has a rectangular cross-section. The building block 65k is shown covered with a covering layer 61k to form an outer shape with the rectangular cross-section. The interlayers 66k may be formed, e.g., from veil, woven, nonwoven, chopped strand, carbon, glass, dry, prepreg. The covering layer 61k may be formed, e.g., from glass or CSM (Chopped Strand Mat, glass-reinforced plastic). In an embodiment, the interlayers 66k and the covering layer 61k may be, e.g., formed from one material.

Pre-assembled building block 65l comprises six strips 63l, 64l of fibre material arranged into a stack of strips. The strips 63l, 64l may be made e.g. from carbon, glass or hybrid glass/carbon material. The six strips 63l, 64l are laid up onto each other to form a column of strips. The six strips 63l, 64l have the same size. In an embodiment strips 63l, 64l may be of different sizes. The building block 65l comprises five interlayers 66l arranged between the six strips 63l, 64l such that adjacent strips 63l, 64l are separated by an interlayer 66l. The interlayers 66l may be made e.g. from veil, woven, nonwoven, chopped strand, carbon, glass, dry, prepreg. The building block 65l has a cross-section of right trapezium. The building block 65l is shown covered with a covering layer 61l to form an outer shape with the cross-section of right trapezium. The interlayers 66l may be formed, e.g., from veil, woven, nonwoven, chopped strand, carbon, glass, dry, prepreg. The covering layer 61l may be formed, e.g., from glass or CSM (Chlorosulphonated Polyethylene). In an embodiment, the interlayers 66l and the covering layer 61l may be, e.g., formed from one material.

Pre-assembled building block 65m comprises six strips 63m, 64m of fibre material arranged into a stack of strips. The strips 63m, 64m may be made e.g. from carbon, glass or hybrid glass/carbon material. The six strips 63m, 64m are laid up onto each other to form a column of strips. The six strips 63m, 64m have the same size. In an embodiment strips 63m, 64m may be of different sizes. The building block 65m comprises five interlayers 66m arranged between the six strips 63m, 64m such that adjacent strips 63m, 64m are separated by an interlayer 66m. The interlayers 66m may be made e.g. from veil, woven, nonwoven, chopped strand, carbon, glass, dry, prepreg. The building block 65m has a cross-section of a trapezium. The building block 65m is shown covered with a covering layer 61m to form an outer shape with the cross-section of a trapezium. In an embodiment, the building block 65m may have a cross-section of isosceles trapezium. The interlayers 66m may be formed, e.g., from veil, woven, nonwoven, chopped strand, carbon, glass, dry, prepreg. The covering layer 61m may be formed, e.g., from glass or CSM (Chopped Strand Mat, glass-reinforced plastic). In an embodiment, the interlayers 66m and the covering layer 61m may be, e.g., formed from one material.

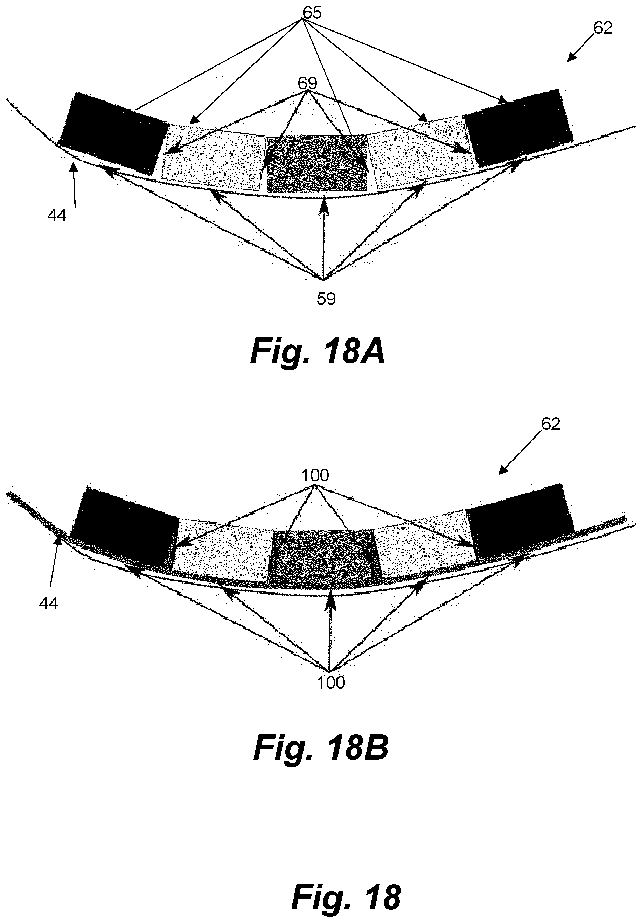

Using the building blocks 65i or 65m shaped with a trapezium cross-section to form a reinforcing structure, e.g. any of reinforcing structure 62 shown in Figs. 10, 15-18, minimizes the gap between the neighboring building blocks (columns) in the reinforcing structure. As can be seen in Fig. 18 below, when the building blocks are assembled in the shell mould 44, which has rounded shape, the building blocks shaped to have the trapezium cross-section may be preferably used to minimize the gaps between the building blocks. Minimized gaps between the building blocks would provide an improved transverse connections between the building blocks, e.g. between the columns, of the reinforcing structure.

The building blocks of the modular system shown in Figs. 11-14 are not limiting examples of the building blocks that could be part of the modular system in accordance with the present invention. The building blocks may have different numbers of strips, columns, rows, interlayers of different sizes and have gaps of different sizes.

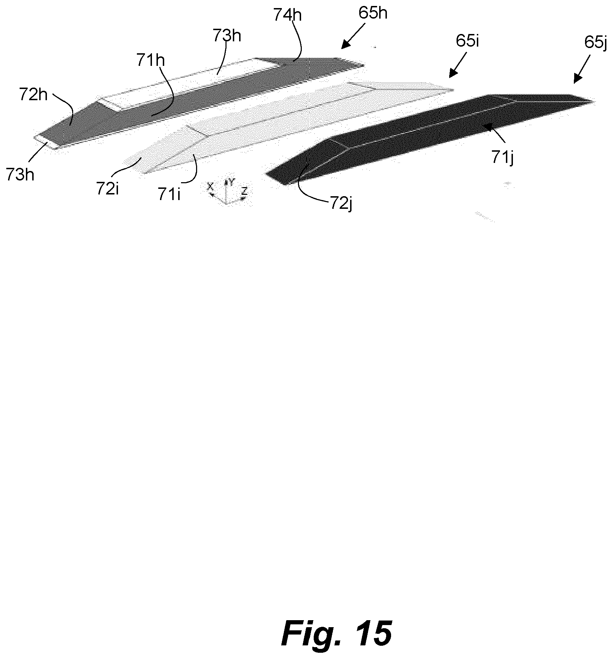

Fig. 15 shows building blocks which may be used in the modular system. The shown building blocks may be pre-assembled and combined in one modular system in an embodiment.

Fig. 15 shows building blocks 65h, 65i and 65j. Building blocks 65h, 65i and 65j are beam columns made from different materials. Building block 65h is a Glass-Foam core sandwich beam or a glass-foam core building block 65h, where 73h are two glass panels and 74h is foam core. The core 74h may be made from PET foam, e.g. the PET foam with the density in the range from PET80 to PET400, or balsa. Building block 65i is a glass pultrusion beam or a glass pultrusion building block 65i. Building block 65j is a carbon pultrusion beam or a carbon pultrusion building block 65j.

Building blocks 65h, 65i and 65j are shown having the same shape of trapezoidal prism. Two lateral sides 71h, 71i, 71j or faces of each trapezoidal prism have the form of isosceles trapezoids, in which both legs and both base angles are of equal measure. Two lateral sides 71h, 71i, 71j of each building block 65h, 65i and 65j are connected to each other with four rectangular sides. Sides 72h, 72i and 72j of the building blocks 65h, 65i and 65j are tapered to upper and bottom rectangular sides of the building blocks 65h, 65i and 65j.

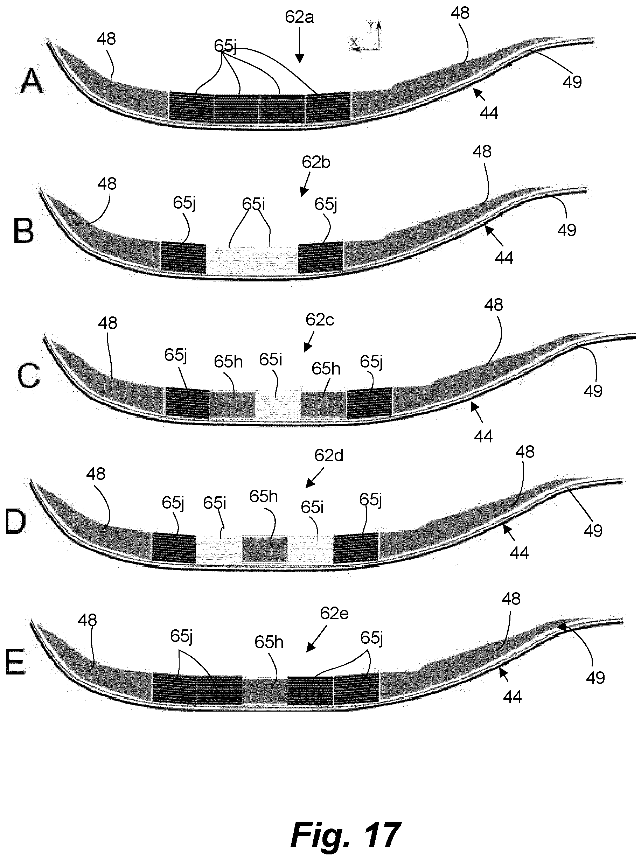

Sides 72h, 72i and 72 j are shown in Figs. 17-18 described below. Although the building blocks 65h, 65i and 65j are shown in Fig. 15 as single blocks, they are formed, e.g. pre-assembled, e.g. pre-infused, from the strips of fibre material, e.g. fibre-reinforced glass fibres or carbon fibres.

Using the building blocks 65h, 65i and 65j provides an option to make gradual stiffness tapering towards the tip 14 of the blade 10. Using the building blocks 65h, 65i and 65j also provides an option to bring in glass pultrusions, e.g. using glass pultrusion beam 65i, towards the tip 14 of the blade 10 to enhance the stiffness at the tip 14 and reduce tip deflections.

Upon assembling the reinforcing structure using the building blocks 65h, 65i and 65j in accordance with the embodiment, all carbon pultrusion columns, e.g. carbon pultrusion beams 65j, are to be arranged at a distance, e.g. 9 m, from the tip 14 of the blade 10. Lightning design rules do not allow carbon to be used till the tip 14 of the blade 10.

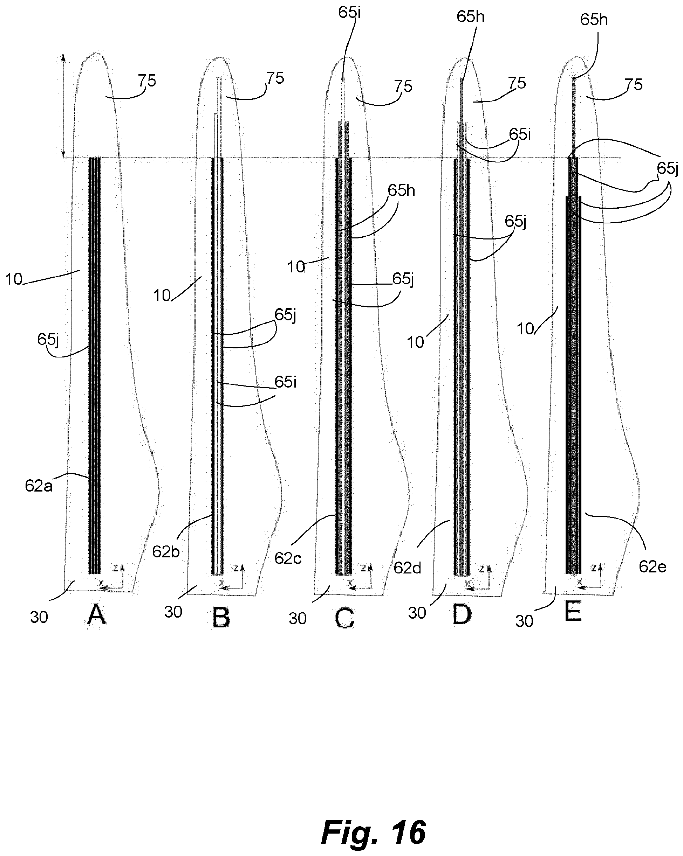

The coordinate system XYZ of Fig. 15 is used in Figs. 16 and 17 described below.

Figs. 16 and 17 show reinforcing structures formed using, for example, the building blocks 65h, 65i and 65j shown in Fig. 15. Fig. 16 shows five different embodiments of the blade 10 with the reinforcing structures 62a-62e assembled in the blade shell mould from a combination of the building blocks 65h, 65i and 65j. Fig. 17 shows a cross-sectional view of five different embodiments of the blade 10 shown in Fig. 16 in the blade shell mould.

Fig. 16(A) and Fig. 17(A) show the blade 10 with the reinforcing structure 62a. Fig. 16(A) shows a top view of the blade 10 with the reinforcing structure 62a. Fig. 17(A) shows a cross-sectional view of the blade shell mould 44 with the reinforcing structure 62a. The reinforcing structure 62a is assembled from the carbon pultrusion building blocks 65j or carbon pultrusion columns shown in Fig. 15. All carbon pultrusion building blocks 65j of the reinforcing structure 62a are of the same length. The carbon pultrusion building blocks 65j extend from the root region 30 of the blade 10 in the direction of the tip 14 of the blade. The carbon pultrusion building blocks 65j extend to the distance, e.g. 9 m, from the tip 14 of the blade 10, thus forming a carbon free area 75 at the tip 14 of the blade 10. As shown in Fig. 17(A), the reinforcing structure 62a is arranged, e.g. assembled, in a blade shell mould 44. Core material 48 is arranged on both sides of the reinforcing structure 62a in the blade shell mould 44. Glass fabrics 49 is layered in the blade shell mould 44 under the reinforcing structure 62a and the core material 48.

Fig. 16(B) and Fig. 17(B) show the blade 10 with the reinforcing structure 62b. Fig. 16(B) shows a top view of the blade 10 with the reinforcing structure 62b. Fig. 17(B) shows a cross-sectional view of the blade shell mould 44 with the reinforcing structure 62b. The reinforcing structure 62b is assembled from a combination of the glass pultrusion building blocks 65i or glass pultrusion columns shown in Fig. 15 and the carbon pultrusion building blocks 65j or carbon pultrusion columns shown in Fig. 15. The glass pultrusion building blocks 65i are arranged in a centre of the reinforcing structure 62b and the carbon pultrusion building blocks 65j are arranged on both sides of the glass pultrusion building blocks 65i. All carbon pultrusion building blocks 65j of the reinforcing structure 62a are of the same length. The carbon pultrusion building blocks 65j extend from the root region 30 of the blade 10 in the direction of the tip 14 of the blade. The carbon pultrusion building blocks 65j extend to the distance, e.g. 9 m, from the tip 14 of the blade 10, thus forming a carbon free area 75 at the tip 14 of the blade 10. The glass pultrusion building blocks 65i have different lengths and the lengths of both glass pultrusion building blocks 65i is larger than the length of the carbon pultrusion building blocks 65j. The glass pultrusion building blocks 65i extend from the root region 30 of the blade 10 closer to the tip 14 of the blade 10 than the carbon pultrusion building blocks 65j. The glass pultrusion building blocks 65i extend to the carbon free area 75. The glass pultrusion building blocks 65i may extend to the tip 14 of the blade 10, thus decreasing the tip deflection and saving mass of the blade 10. Core material 48 is arranged on both sides of the reinforcing structure 62b in the blade shell mould 44. Glass fabrics 49 is layered in the blade shell mould 44 under the reinforcing structure 62b and the core material 48.

Fig. 16(C) and Fig. 17(C) show the blade 10 with the reinforcing structure 62c. Fig. 16(C) shows a top view of the blade 10 with the reinforcing structure 62c. Fig. 17(C) shows a cross-sectional view of the blade shell mould 44 with the reinforcing structure 62c. The reinforcing structure 62c is assembled from a combination of the glass-foam core building blocks 65h or glass foam core sandwich beams shown in Fig. 15, the glass pultrusion building blocks 65i or glass pultrusion columns shown in Fig. 15 and the carbon pultrusion building blocks 65j or carbon pultrusion columns shown in Fig. 15. One glass pultrusion building block 65i is arranged in the centre of the reinforcing structure 62c. In an embodiment, more than one glass pultrusion building block 65i may be arranged in the centre of the reinforcing structure 62c. The glass-foam core building blocks 65h are arranged on both sides of the glass pultrusion building block 65i. The carbon pultrusion building blocks 65j are arranged on both sides of the glass-foam core building blocks 65h. The glass-foam core building blocks 65h separate the glass pultrusion building block 65i and the carbon pultrusion building blocks 65j. All carbon pultrusion building blocks 65j of the reinforcing structure 62c are of the same length. The carbon pultrusion building blocks 65j extend from the root region 30 of the blade 10 in the direction of the tip 14 of the blade. The carbon pultrusion building blocks 65j extend to the distance, e.g. 9 m, from the tip 14 of the blade 10, thus forming a carbon free area 75 at the tip 14 of the blade 10. The glass-foam core building blocks 65h are of the same length, and the length of both glass-foam core building blocks 65h is larger than the length of the carbon pultrusion building blocks 65j. The glass-foam core building blocks 65h extend from the root region 30 of the blade 10 closer to the tip 14 of the blade 10 than the carbon pultrusion building blocks 65j. The glass-foam core building blocks 65h extend to the carbon free area 75. The length of the glass pultrusion building block 65i is larger than the length of the carbon pultrusion building blocks 65j and the length of glass-foam core building blocks 65h. The glass pultrusion building block 65i extends from the root region 30 of the blade 10 to the tip 14 of the blade 10. The glass pultrusion building block 65i extends to the carbon free area 75. The reinforcing structure 62c provides an improved design flexibility, e.g. in view of torsion of the blade 10. Core material 48 is arranged on both sides of the reinforcing structure 62c in the blade shell mould 44. Glass fabrics 49 is layered in the blade shell mould 44 under the reinforcing structure 62c and the core material 48.

Fig. 16(D) and Fig. 17(D) show the blade 10 with the reinforcing structure 62d. Fig. 16(D) shows a top view of the blade 10 with the reinforcing structure 62d. Fig. 17(D) shows a cross-sectional view of the blade shell mould 44 with the reinforcing structure 62d. The reinforcing structure 62d is assembled from a combination of the glass-foam core building blocks 65h or glass-foam core sandwich beams shown in Fig. 15, the glass pultrusion building blocks 65i or glass pultrusion columns shown in Fig. 15 and the carbon pultrusion building blocks 65j or carbon pultrusion columns shown in Fig. 15. One glass-foam core building block 65h is arranged in the centre of the reinforcing structure 62d. In an embodiment, more than one glass-foam core building block 65h may be arranged in the centre of the reinforcing structure 62d. The glass pultrusion building blocks 65i are arranged on both sides of the glass-foam core building block 65h. The carbon pultrusion building blocks 65j are arranged on both sides of the glass pultrusion building blocks 65i. The glass pultrusion building blocks 65i separate the glass-foam core building block 65h and the carbon pultrusion building blocks 65j. All carbon pultrusion building blocks 65j of the reinforcing structure 62d are of the same length. The carbon pultrusion building blocks 65j extend from the root region 30 of the blade 10 in the direction of the tip 14 of the blade. The carbon pultrusion building blocks 65j extend to the distance, e.g. 9 m, from the tip 14 of the blade 10, thus forming a carbon free area 75 at the tip 14 of the blade 10. The glass pultrusion building blocks 65i are of the same length, and the length of both glass pultrusion building blocks 65i is larger than the length of the carbon pultrusion building blocks 65j. The glass pultrusion building blocks 65i extend from the root region 30 of the blade 10 closer to the tip 14 of the blade 10 than the carbon pultrusion building blocks 65j. The glass pultrusion building blocks 65i extend to the carbon free area 75. The length of the glass-foam core building block 65h is larger than the length of the carbon pultrusion building blocks 65j and the length of glass pultrusion building blocks 65i. The glass-foam core building block 65h extends from the root region 30 of the blade 10 to the tip 14 of the blade 10. The glass-foam core building block 65h extends to the carbon free area 75. The reinforcing structure 62d provides gradual reduction of stiffness along blade length since glass and carbon columns (glass pultrusion building blocks and carbon pultrusion building blocks) have different stiffness. Core material 48 is arranged on both sides of the reinforcing structure 62d in the blade shell mould 44. Glass fabrics 49 is layered in the blade shell mould 44 under the reinforcing structure 62d and the core material 48.

Fig. 16(E) and Fig. 17(E) show the blade 10 with the reinforcing structure 62e. Fig. 16(E) shows a top view of the blade 10 with the reinforcing structure 62e. Fig. 17(E) shows a cross-sectional view of the blade shell mould 44 with the reinforcing structure 62e. The reinforcing structure 62e is assembled from a combination of the glass-foam core building blocks 65h or glass foam core sandwich beams shown in Fig. 15, and the carbon pultrusion building blocks 65j or carbon pultrusion columns shown in Fig. 15. One glass-foam core building block 65h is arranged in the centre of the reinforcing structure 62e. In an embodiment, more than one glass-foam core building block 65h may be arranged in the centre of the reinforcing structure 62e. The carbon pultrusion building blocks 65j are arranged on both sides of the glass-foam core building block 65h. Two carbon pultrusion building blocks 65j are arranged on each side of the glass-foam core building block 65h. Two carbon pultrusion building blocks 65j of the reinforcing structure 62e arranged adjacent to the glass-foam core building block 65h are of the same length. Two other carbon pultrusion building blocks 65j of the reinforcing structure 62e arranged external to the reinforcing structure 62e are also of the same length. The carbon pultrusion building blocks 65j extend from the root region 30 of the blade 10 in the direction of the tip 14 of the blade. Two carbon pultrusion building blocks 65j arranged adjacent to the glass-foam core building block 65h extend to the distance, e.g. 9 m, from the tip 14 of the blade 10, thus forming a carbon free area 75 at the tip 14 of the blade 10. The carbon pultrusion building blocks 65j arranged adjacent to the glass-foam core building block 65h have the length longer than the carbon pultrusion building blocks 65j arranged external to the reinforcing structure 62e. The length of the glass-foam core building block 65h is larger than the length of the carbon pultrusion building blocks 65j. The glass-foam core building block 65h extends from the root region 30 of the blade 10 to the tip 14 of the blade 10. The glass-foam core building block 65h extends to the carbon free area 75. In the reinforcing structure 62e beam columns of carbon pultrusion (the carbon pultrusion building blocks 65j) are separated by foam. The reinforcing structure 62e enables providing more spacing between shear webs (since shear webs are placed on the carbon pultrusion beams) as well as enables for gradual width and length transitions. Core material 48 is arranged on both sides of the reinforcing structure 62e in the blade shell mould 44. Glass fabrics 49 is layered in the blade shell mould 44 under the reinforcing structure 62e and the core material 48.

Fig. 18 shows a cross-sectional view of a reinforcing structure 62 in a blade shell mould 44.

As shown in Fig18A, the reinforcing structure 62 is formed from pre-assembled building blocks 65, e.g. those shown in Figs. 11-14. The blade shell mould 44 is curved. The reinforcing structure 62 comprises gaps 69 formed between the building blocks 65. The gaps 69 are "A"-shaped gaps. Gaps (space) 59 are formed between the building blocks 65 with flat bottom side (surface) and the curved blade shell mould 44.

Fig. 18B shows compressible foam 100 that fills both "A"-shaped gaps 69 between the building blocks 65 and the gaps 59 between the building blocks 65 and the blade shell mould 44. Filling the gaps 69 and 59 with the compressible foam 100 provides core filler between and under the building blocks 65. The compressible foam 100 fills out the "A"-shaped gaps 69 formed between the building blocks 65 when placed in a concave mould 44. The compressible foam 100 fills out the curved space, e.g. the gaps 59, between the bottom of the flat building blocks 65 and the curved mould 44. Filling the gaps 69 and 59 with the compressible foam 100 enables manufacturing the building blocks 65 on flat tables instead of more complicated and more expensive moulds. The gaps 69 and 59 may be alternatively filled with other expandable gap filling materials, e.g. veils or powder bound fabrics.

Using the building blocks 65i or 65m shaped with a trapezium cross-section shown in Fig. 14 to form the reinforcing structure 62 may minimize the gap between the neighboring building blocks (columns) in the reinforcing structure 62.

The disclosure has been described with reference to a preferred embodiment. However, the scope of the invention is not limited to the illustrated embodiment, and alterations and modifications can be carried out without deviating from the scope of the invention as defined in the appended claims.

Throughout the description, the use of the terms "first", "second", "third", "fourth", "primary", "secondary", "tertiary" etc. does not imply any particular order or importance but are included to identify individual elements. Furthermore, the labelling of a first element does not imply the presence of a second element and vice versa.

### LIST OF REFERENCES

- 2: wind turbine
- 4: tower
- 6: nacelle
- 8: hub
- 10: blade
- 14: blade tip
- 16: blade root
- 18: leading edge
- 20: trailing edge
- 30: root region
- 32: transition region
- 34: airfoil region
- 36: pressure side shell part
- 38: suction side shell part
- 41: spar cap
- 42: fibre layers
- 43: sandwich core material
- 44: blade shell mould
- 45: spar cap
- 46: fibre layers
- 47: sandwich core material
- 48: core material
- 49: glass fabrics
- 50: first shear web
- 51: core member
- 52: skin layers
- 55: second shear web
- 56: core member
- 57: skin layers
- 59: gap
- 61k-m: covering layer
- 62, 62a-g: reinforcing structure
- 63a-c,e-g,k-m: strip
- 64a-g, k-m: uppermost strip
- 65a-m: building block/stack of strips
- 66a-c,e-g',k-m: interlayer
- 67: fibre-reinforced layer
- 68: uppermost fibre-reinforced layer
- 69: gap
- 70d,e: vertical interlayer
- 71h,i,j: lateral sides of building blocks
- 72h,i,j: tapered sides of building blocks
- 73h: glass panel
- 74h: foam core
- 75: carbon free area
- 80: method of manufacturing a wind turbine blade
- 81-83a, 84: method steps
- 90: method of manufacturing a reinforcing structure
- 93,93a,94: method steps
- 100: compressible foam

## Claims

1. A method of manufacturing a wind turbine blade (10) comprising a reinforcing structure (62), the wind turbine blade (10) having a profiled contour including a pressure side (36) and a suction side (38), and a leading edg (18) and a trailing edge (20) with a chord having a chord length extending therebetween, the wind turbine blade (10) extending in a spanwise direction between a root end (16) and a tip end (14), the method comprising the steps of:
providing a blade shell mould (44),
arranging a plurality of blade shell components in the blade shell mould,
assembling of the reinforcing structure in the blade shell mould, the reinforcing structure comprising a plurality of strips (63) of fibre material arranged into adjacent stacks of strips, and
wherein the step of assembling of the reinforcing structure in the blade shell mould comprises pre-assembling a plurality of separate pre-infused building blocks (65),
each building block comprising a plurality of the strips of fibre material formed into a stack, and at least one interlayer (70) disposed in between neighbouring strips in the stack.

2. The method according to claim 1, wherein the step of pre-assembling the plurality of building blocks comprises, in at least one building block of the plurality of building blocks, laying up strips onto each other and/or arranging strips adjacent to each other so that at least one building block of the plurality of building blocks is one of: a column of strips, a row of strips or a combination of columns and rows of strips.

3. The method according to any of the preceding claims, further comprising, after the step of assembling of the reinforcing structure in the blade shell mould, infusing resin into each of the stacks of strips or infusing resin into the blade shell mould to form the reinforcing structure.

4. The method according to any of the preceding claims, wherein the step of pre-assembling of the plurality of building blocks comprises forming at least two of the plurality of building blocks simultaneously by multi-cavity injection molding or by pultrusion at a location of the wind turbine blade shell mould.

5. A method of manufacturing a reinforcing structure (62) for a wind turbine blade (10), the method comprising the steps of:
assembling of the reinforcing structure, the reinforcing structure comprising a plurality of strips (64) of fibre material arranged into adjacent stacks of strips (65),
wherein the step of assembling of the reinforcing structure comprises pre-assembling a plurality of separate pre-infused building blocks (65),
each building block comprising a plurality of the strips of fibre material formed into a stack, and at least one interlayer (70) disposed in between neighbouring strips in the stack.

6. A reinforcing structure (62) for a wind turbine blade, the reinforcing structure (62) comprising a plurality of strips (63, 64) of fibre material arranged into adjacent stacks (65) of strips, wherein the reinforcing structure (62) comprises a plurality of separate pre-assembled and pre-infused building blocks, each building block comprising a plurality of the strips of fibre material formed into a stack, and at least one interlayer disposed in between neighbouring strips in the stack.

7. The reinforcing structure (62) according to claim 6, wherein the plurality of strips in at least one building block of the plurality of building blocks are laid up onto each other and/or arranged adjacent to each other and the at least one building block of the plurality of building blocks is one of: a column of strips, a row of strips, a combination of columns and rows of strips.

8. The reinforcing structure (62) according to any of claims 6-7, wherein the strips (63, 64, 65) in the at least one building block of the plurality of building blocks have the same size or different sizes, preferably the same length and/or thickness or different lengths and/or thicknesses.

9. The reinforcing structure (62) according to any of claims 6-8, wherein each of the plurality of strips (63, 64, 65) in the at least one building block of the plurality of building blocks has a height/thickness of preferably between 3 and 10 mm, more preferably between 4 and 7 mm, most preferably 5 mm, and a width of preferably between 20 and 300 mm, more preferably between 80 and 150 mm, most preferably 100 mm.

10. The reinforcing structure (62) according to any of claims 6-9, wherein at least two building blocks (66) of the plurality of building blocks comprise same or different number of strips and interlayers.

11. The reinforcing structure (62) according to any of claims 6-10, wherein the reinforcing structure (62) is a spar cap for a wind turbine blade and optionally the plurality of strips of fibre-reinforced material are pultruded planks comprising fibre reinforced carbon fibres and/or glass fibres.

12. A modular system for manufacturing a reinforcing structure (62) for a wind turbine blade (10) in at least two different spatial arrangements, the system comprising:
a plurality of separate pre-assembled and pre-infused building blocks (65), each building block comprising a plurality of the strips (64) of fibre material formed into a stack, and at least one interlayer (70) disposed in between neighbouring strips in the stack,
wherein separate pre-assembled and pre-infused building blocks in the plurality of pre-assembled building blocks are attachable to each other so that the modular system is operable to form the reinforcing structure comprising a plurality of strips of fibre material arranged into adjacent stacks of strips.

13. The modular system according to claim 12, wherein the plurality of strips in at least one building block of the plurality of building blocks are laid up onto each other and/or arranged adjacent to each other and the at least one building block of the plurality of building blocks is one of: a column of strips, a row of strips, a combination of columns and rows of strips.

14. The modular system according to any of claims 12-13, wherein at least two building blocks of the plurality of building blocks have shapes compatible to each other and the corresponding building blocks with compatible shapes are attachable to each other.

15. A wind turbine blade comprising one or more reinforcing structures according to any of claims 6-11.

## Patentansprüche

1. Verfahren zum Herstellen einer Windturbinenschaufel (10), umfassend eine Verstärkungsstruktur (62), wobei die Windturbinenschaufel (10) eine profilierte Kontur, die eine Druckseite (36) und eine Saugseite (38) einschließt, sowie eine Vorderkante (18) und eine Hinterkante (20) mit einer Sehne, aufweisend eine Sehnenlänge, die sich dazwischen erstreckt, aufweist, wobei sich die Windturbinenschaufel (10) in Spannweitenrichtung zwischen einem Fußende (16) und einem Spitzenende (14) erstreckt, wobei das Verfahren die folgenden Schritte umfasst:
Bereitstellen einer Schaufelschalenform (44),
Anordnen einer Vielzahl von Schaufelschalenkomponenten in der Schaufelschalenform,
Zusammenbauen der Verstärkungsstruktur in der Schaufelschalenform, wobei die Verstärkungsstruktur eine Vielzahl von Streifen (63) aus Fasermaterial umfasst, die zu benachbarten Stapeln von Streifen angeordnet sind, und
Wobei der Schritt des Zusammenbauens der Verstärkungsstruktur in der Schaufelmantelform das Vorzusammenbauen einer Vielzahl separater, vorinfundierter Bausteine (65) umfasst, wobei jeder Baustein eine Vielzahl der zu einem Stapel geformten Streifen aus Fasermaterial und mindestens eine Zwischenschicht (70) umfasst, die zwischen benachbarten Streifen im Stapel angeordnet ist.

2. Verfahren nach Anspruch 1, wobei der Schritt des Vorzusammenbauens der Vielzahl von Bausteinen, in mindestens einem Baustein der Vielzahl von Bausteinen, das Übereinanderlegen von Streifen und/oder nebeneinander das Anordnen von Streifen umfasst, so dass mindestens ein Baustein der Vielzahl von Bausteinen eines der folgenden ist: eine Spalte aus Streifen, eine Zeile aus Streifen oder eine Kombination aus Spalten und Zeilen aus Streifen.

3. Verfahren nach einem der vorstehenden Ansprüche, weiter umfassend, nach dem Schritt des Zusammenbauens der Verstärkungsstruktur in der Schaufelschalenform, das Einleiten von Harz in jeden der Stapel von Streifen oder Einleiten von Harz in die Schaufelschalenform, um die Verstärkungsstruktur zu bilden.

4. Verfahren nach einem der vorstehenden Ansprüche, wobei der Schritt des Vorzusammenbauens der Vielzahl von Bausteinen gleichzeitiges Formen von mindestens zwei aus der Vielzahl von Bausteinen durch Mehrfach-Spritzgießen oder durch Pultrusion an einer Stelle der Windturbinenschaufelform umfasst.

5. Verfahren zum Herstellen einer Verstärkungsstruktur (62) für eine Windturbinenschaufel (10), wobei das Verfahren die folgenden Schritte umfasst:
Zusammenbauen der Verstärkungsstruktur, wobei die Verstärkungsstruktur eine Vielzahl von Streifen (64) aus Fasermaterial umfasst, die zu benachbarten Stapeln von Streifen (65) angeordnet sind,
wobei der Schritt des Zusammenbauens der Verstärkungsstruktur das Vorzusammenbauen einer Vielzahl separater, vorinfundierten Bausteine (65) umfasst, wobei jeder Baustein eine Vielzahl der zu einem Stapel geformten Streifen aus Fasermaterial und mindestens eine Zwischenschicht (70) umfasst, die zwischen benachbarten Streifen im Stapel angeordnet ist.

6. Verstärkungsstruktur (62) für eine Windturbinenschaufel, wobei die Verstärkungsstruktur (62) eine Vielzahl von Streifen (63, 64) aus Fasermaterial umfasst, die zu benachbarten Stapeln (65) von Streifen angeordnet sind, wobei die Verstärkungsstruktur (62) eine Vielzahl von separaten, vorzusammengebauten und vorinfundierten Bausteinen umfasst, wobei jeder Baustein eine Vielzahl der zu einem Stapel geformten Streifen aus Fasermaterial und mindestens eine zwischen benachbarten Streifen im Stapel angeordnete Zwischenschicht umfasst.

7. Verstärkungsstruktur (62) nach Anspruch 6, wobei die Vielzahl von Streifen in mindestens einem Baustein der Vielzahl von Bausteinen übereinander gelegt und/oder nebeneinander angeordnet ist und der mindestens eine Baustein der Vielzahl von Bausteinen eines der folgenden ist: eine Spalte von Streifen, eine Zeile von Streifen, eine Kombination aus Spalten und Zeilen von Streifen.

8. Verstärkungsstruktur (62) nach einem der Ansprüche 6-7, wobei die Streifen (63, 64, 65) in dem mindestens einen Baustein der Vielzahl von Bausteinen dieselbe Größe oder unterschiedliche Größen, vorzugsweise dieselbe Länge und/oder Dicke oder unterschiedliche Längen und/oder Dicken aufweisen.

9. Verstärkungsstruktur (62) nach einem der Ansprüche 6-8, wobei jeder der Vielzahl von Streifen (63, 64, 65) in dem mindestens einen Baustein der Vielzahl von Bausteinen eine Höhe/Dicke von vorzugsweise zwischen 3 und 10 mm, noch bevorzugter zwischen 4 und 7 mm, am meisten bevorzugt 5 mm, und eine Breite von vorzugsweise zwischen 20 und 300 mm, noch bevorzugter zwischen 80 und 150 mm, am meisten bevorzugt 100 mm, aufweist.

10. Verstärkungsstruktur (62) nach einem der Ansprüche 6-9, wobei mindestens zwei Bausteine (66) der Vielzahl von Bausteinen die gleiche oder eine unterschiedliche Anzahl von Streifen und Zwischenschichten umfassen.

11. Verstärkungsstruktur (62) nach einem der Ansprüche 6-10, wobei die Verstärkungsstruktur (62) eine Holmkappe für eine Windturbinenschaufel ist und die Vielzahl von Streifen optional aus faserverstärktem Material pultrudierte Planken sind, die faserverstärkte Kohlenstofffasern und/oder Glasfasern umfassen.

12. Modulares System zum Herstellen einer Verstärkungsstruktur (62) für eine Windturbinenschaufel (10) in mindestens zwei verschiedenen räumlichen Anordnungen, wobei das System Folgendes umfasst:
eine Vielzahl von separaten, vorzusammengebauten und vorinfundierten Bausteinen (65), wobei jeder Baustein eine Vielzahl von zu einem Stapel geformten Streifen (64) aus Fasermaterial und mindestens eine Zwischenschicht (70) umfasst, die zwischen benachbarten Streifen im Stapel angeordnet ist,
wobei separate, vorzusammengebaute und vorinfundierte Bausteine aus der Vielzahl von vorzusammengebauten Bausteinen aneinander befestigbar sind, so dass das modulare System dazu betreibbar ist, die Verstärkungsstruktur zu bilden, die eine Vielzahl von Streifen aus Fasermaterial umfasst, die zu benachbarten Stapeln von Streifen angeordnet sind.

13. Modulares System nach Anspruch 12, wobei die Vielzahl von Streifen in mindestens einem Baustein der Vielzahl von Bausteinen übereinander gelegt und/oder nebeneinander angeordnet ist und der mindestens eine Baustein der Vielzahl von Bausteinen eines der folgenden ist: eine Spalte von Streifen, eine Zeile von Streifen, eine Kombination aus Spalten und Zeilen von Streifen.

14. Modulares System nach einem der Ansprüche 12-13, wobei mindestens zwei Bausteine der Vielzahl von Bausteinen zueinander kompatible Formen aufweisen und die entsprechenden Bausteine mit kompatiblen Formen aneinander befestigbar sind.

15. Windturbinenschaufel, umfassend eine oder mehrere Verstärkungsstrukturen nach einem der Ansprüche 6-11.

## Revendications

1. Procédé de fabrication d'une pale d'éolienne (10) comprenant une structure de renfort (62), la pale d'éolienne (10) présentant un contour profilé incluant un côté pression (36) et un côté aspiration (38), et un bord d'attaque (18) et un bord de fuite (20) avec une corde présentant une longueur de corde s'étendant entre ceux-ci, la pale d'éolienne (10) s'étendant dans une direction longitudinale entre une extrémité d'emplanture (16) et une extrémité de pointe (14), le procédé comprenant les étapes suivantes :
se mettre à disposition un moule de coque de pale (44),
agencer une pluralité de composants de coque de pale dans le moule de coque de pale,
assembler la structure de renfort dans le moule de coque de pale, la structure de renfort comprenant une pluralité de bandes (63) de matériau fibreux agencées en empilements adjacents de bandes, et
dans lequel l'étape d'assemblage de la structure de renfort dans le moule de coque de pale comprend le pré-assemblage d'une pluralité de blocs de construction séparés pré-imprégnés de résine (65), chaque bloc de construction comprenant une pluralité desdites bandes de matériau fibreux formées en un empilement, et au moins une couche intermédiaire (70) disposée entre des bandes voisines dans l'empilement.

2. Procédé selon la revendication 1, dans lequel l'étape de pré-assemblage de la pluralité de blocs de construction comprend, dans au moins un bloc de construction de la pluralité de blocs de construction, la superposition de bandes les unes sur les autres et/ou l'agencement de bandes adjacentes les unes aux autres de sorte qu'au moins un bloc de construction de la pluralité de blocs de construction est un parmi : une colonne de bandes, une rangée de bandes ou une combinaison de colonnes et de rangées de bandes.

3. Procédé selon l'une quelconque des revendications précédentes, comprenant en outre, après l'étape d'assemblage de la structure de renfort dans le moule de coque de pale, l'infusion de résine dans chacun des empilements de bandes ou l'infusion de résine dans le moule de coque de pale pour former la structure de renfort.

4. Procédé selon l'une quelconque des revendications précédentes, dans lequel l'étape de pré-assemblage de la pluralité de blocs de construction comprend le formage d'au moins deux blocs de construction de la pluralité de blocs de construction simultanément, par moulage par injection à cavités multiples ou par pultrusion à un emplacement du moule de coque de pale d'éolienne.

5. Procédé de fabrication d'une structure de renfort (62) pour une pale d'éolienne (10), le procédé comprenant les étapes suivantes :
assemblage de la structure de renfort, la structure de renfort comprenant une pluralité de bandes (64) de matériau fibreux agencées en empilements adjacents de bandes (65),
dans lequel l'étape d'assemblage de la structure de renfort comprend le pré-assemblage d'une pluralité de blocs de construction séparés pré-imprégnés de résine (65), chaque bloc de construction comprenant une pluralité desdites bandes de matériau fibreux formées en un empilement, et au moins une couche intermédiaire (70) disposée entre des bandes voisines dans l'empilement.

6. Structure de renfort (62) pour une pale d'éolienne, la structure de renfort (62) comprenant une pluralité de bandes (63, 64) de matériau fibreux agencées en empilements adjacents (65) de bandes, dans laquelle la structure de renfort (62) comprend une pluralité de blocs de construction séparés pré-assemblés et pré-imprégnés de résine, chaque bloc de construction comprenant une pluralité desdites bandes de matériau fibreux formées en un empilement, et au moins une couche intermédiaire disposée entre des bandes voisines dans l'empilement.

7. Structure de renfort (62) selon la revendication 6, dans laquelle la pluralité de bandes dans au moins un bloc de construction de la pluralité de blocs de construction sont superposées les unes sur les autres et/ou agencées de manière adjacente les unes aux autres, et ledit au moins un bloc de construction de la pluralité de blocs de construction est un parmi : une colonne de bandes, une rangée de bandes, une combinaison de colonnes et de rangées de bandes.

8. Structure de renfort (62) selon l'une quelconque des revendications 6 à 7, dans laquelle les bandes (63, 64, 65) dans ledit au moins un bloc de construction de la pluralité de blocs de construction présentent la même taille ou des tailles différentes, de préférence la même longueur et/ou épaisseur ou des longueurs et/ou épaisseurs différentes.

9. Structure de renfort (62) selon l'une quelconque des revendications 6 à 8, dans laquelle chaque bande de la pluralité de bandes (63, 64, 65) dans ledit au moins un bloc de construction de la pluralité de blocs de construction présente une hauteur/épaisseur de préférence entre 3 et 10 mm, de manière encore préférée, entre 4 et 7 mm, de manière la plus préférée, 5 mm, et une largeur de préférence entre 20 et 300 mm, de manière encore préférée, entre 80 et 150 mm, de manière la plus préférée, 100 mm.

10. Structure de renfort (62) selon l'une quelconque des revendications 6 à 9, dans laquelle au moins deux blocs de construction (66) de la pluralité de blocs de construction comprennent le même nombre ou un nombre différent de bandes et de couches intermédiaires.

11. Structure de renfort (62) selon l'une quelconque des revendications 6 à 10, dans laquelle la structure de renfort (62) est un longeron de semelle ("spar cap" en anglais) pour une pale d'éolienne et facultativement la pluralité de bandes de matériau renforcé de fibres sont des planches pultrudées comprenant des fibres de carbone renforcées de fibres et/ou des fibres de verre.

12. Système modulaire pour fabriquer une structure de renfort (62) pour une pale d'éolienne (10) dans au moins deux agencements spatiaux différents, le système comprenant :
une pluralité de blocs de construction séparés (65), pré-assemblés et pré-imprégnés de résine, chaque bloc de construction comprenant une pluralité desdites bandes (64) de matériau fibreux formées en un empilement, et au moins une couche intermédiaire (70) disposée entre des bandes voisines dans l'empilement,
dans lequel des blocs de construction séparés pré-assemblés et pré-imprégnés de résine dans la pluralité de blocs de construction pré-assemblés sont aptes à être fixés les uns aux autres de sorte que le système modulaire est fonctionnellement utilisable pour former la structure de renfort comprenant une pluralité de bandes de matériau fibreux agencées en empilements adjacents de bandes.

13. Système modulaire selon la revendication 12, dans lequel la pluralité de bandes dans au moins un bloc de construction de la pluralité de blocs de construction sont superposées les unes sur les autres et/ou agencées de manière adjacente les unes aux autres et ledit au moins un bloc de construction de la pluralité de blocs de construction est un parmi : une colonne de bandes, une rangée de bandes, une combinaison de colonnes et de rangées de bandes.

14. Système modulaire selon l'une quelconque des revendications 12 à 13, dans lequel au moins deux blocs de construction de la pluralité de blocs de construction présentent des formes compatibles les unes avec les autres et les blocs de construction correspondants présentant des formes compatibles sont aptes à être fixés les uns aux autres.

15. Pale d'éolienne comprenant une ou plusieurs structures de renfort selon l'une quelconque des revendications 6 à 11.
